# EUROPÄISCHE PATENTSCHRIFT

(11) **EP 4 471 224 B1**
(45) Veröffentlichungstag und Bekanntmachung des Hinweises auf die Patenterteilung: **18.02.2026**
(21) Anmeldenummer: 24177519.6
(22) Anmeldetag: 23.05.2024
(51) Int. Cl.: E04D 13/00, G01N 27/04

(54) **BAUBAHN**
CONSTRUCTION RAILWAY
VOIE DE CONSTRUCTION

(30) Priorität: 30.05.2023 DE 102023002171
(43) Veröffentlichungstag der Anmeldung: 04.12.2024
(73) Patentinhaber: EWALD DÖRKEN AG, 58313 Herdecke (DE)
(72) Erfinder: DAHMS, Severin, 44229 Dortmund (DE)
(74) Vertreter: Von Rohr Patentanwälte Partnerschaft mbB

(56) Entgegenhaltungen:
- WO-A1-2019/119007
- US-A1- 2023 048 096

## Beschreibung

Die vorliegende Erfindung betrifft eine Baubahn, die eine Trägerschicht aufweist. Insbesondere ist die Baubahn zur Verwendung als Dachbahn vorgesehen.

Die Baubahn kann im verlegten Zustand als Teil einer Gebäudehülle und/oder eines Baukörpers verwendet werden. Zudem kann die Baubahn an eine bereits im Dachbereich verlegte Gebäudehülle und/oder einen Baukörper angeordnet werden. Insbesondere wird die Baubahn in der Bauwirtschaft und/oder der Bautechnik verwendet. Darüber hinaus kann die Baubahn unterhalb, der Witterungsseite abgewandt, einer Begrünung und/oder eines Pflanzsubstrat und/oder einer Schüttung, insbesondere Kiesschüttung, und/oder an einer Dampfbremse angeordnet sein, insbesondere dem Innenraum eines Gebäudes zugewandt, und/oder als Fassadenbekleidung eingesetzt werden.

Des Weiteren kann die erfindungsgemäße Baubahn auch in Kombination mit einer Dachbahn, Dachfolie, Flachdachbahn, Fassadenbahn, Dampfbremse und/oder Unterdachbahn, insbesondere Unterdeck- bzw. und/oder Unterspannbahn, verwendet werden. Dabei kann die Baubahn an den vorgenannten Bahnen angeordnet und/oder fest mit diesen verbunden sein.

Bei Flachdächern ist es wesentlich, eine Wasser- und Winddichtigkeit unter der Abdichtungsebene und/oder der Hartbedachung und/oder der Fassadenverkleidung und/oder der Dachverkleidung sicherzustellen. Hierzu werden in der Regel wasser- und winddichte Bahnen und/oder eine solche Abdichtungsebene eingesetzt, die aus einer Mehrzahl von Streifen der Bahnen hergestellt wird. Zur Herstellung dieser Abdichtungsebene werden die Bahnen als Bahnenware als langgestreckte Streifen auf dem Dach und/oder entlang einer Fassade, insbesondere in Art als Bestandteil einer Gebäudehülle, befestigt. Die einzelnen Reihen der Baubahnstreifen werden miteinander, insbesondere über eine Klebeverbindung, verbunden oder miteinander verschweißt. Durch die Verbindung der einzelnen Bahnstreifen wird versucht, die notwendige Dichtigkeit der Abdichtungsebene zu gewährleisten.

Aufgrund von Verlegefehlern, aber auch bei Beschädigung der Abdichtungsebene kann es zu Undichtigkeiten kommen. Problematisch ist in diesem Zusammenhang, dass die Gebäudehülle und/oder die Fassadenverkleidung und/oder die Abdichtungsebene bzw. die einzelnen miteinander verbundenen Bahnstreifen im verlegten Zustand nicht ohne Weiteres sichtbar sind, da sie sich in der Regel zwischen der äußeren Verkleidung und einer weiteren Schicht, insbesondere eine Dämmplatte und/oder Kiesschüttungsschicht und/oder Innenverkleidungsplatten, insbesondere Decken-, Wand- und/oder Bodenverkleidung, befinden.

Dringt Feuchtigkeit über die Gebäudehülle und/oder die Abdichtungsebene, insbesondere bei einem Leck, ein, ist der Zeitraum, bis der Schaden erkannt wird, üblicherweise sehr lang. Eine vorhandene erhöhte Feuchtigkeit kann demzufolge unbemerkt Schäden verursachen, die zumeist dann bemerkt werden, wenn das Schadensbild, insbesondere im Inneren des Gebäudes, sichtbar wird. Ein aufgrund von erhöhter Feuchtigkeit hervorgerufener Schaden kann beispielsweise ein Wasserfleck an einer Wand im Innenraum eines Gebäudes sein. Ein derartiger Wasserfleck gibt dann Anlass zur Reparatur, wobei häufig weit mehr Bereiche geschädigt sind als nur die den Wasserfleck aufweisende Wand. Zur Schadensbehebung muss aufwendig die Gebäudehülle zumindest bereichsweise freigelegt werden, um das Leck zu finden. Dies ist üblicherweise mit einem sehr hohen Aufwand und einhergehend mit sehr hohen Kosten verbunden.

Grundsätzlich ist es in der Praxis bekannt, ein Überwachungssystem mit Feuchtesensoren für die Bedachung vorzusehen. Die im Stand der Technik bekannten Feuchtesensoren sind jedoch vergleichsweise fehleranfällig und insbesondere nicht für einen langfristigen Einsatz im Dachbereich geeignet. Darüber hinaus ist die **In**tegration von im Stand der Technik bekannten Feuchtesensoren in eine Baubahn mit einem vergleichsweise großen Kostenaufwand verbunden.

Unter Berücksichtigung des Kosten-Nutzen-Verhältnisses wird in der Praxis meist von einer Überwachung der Feuchtigkeit in der Gebäudehülle und/oder der Unterbedachung abgesehen. Letztlich wird ein zu spätes Erkennen eines Wasserschadens in Anbetracht der Kosten für eine ständige bzw. dauerhafte Überwachung und insbesondere der Kosten für die Bereitstellung des Feuchtesensors an der Baubahn in Kauf genommen.

Ein weiterer Nachteil des Standes der Technik ergibt sich dadurch, dass die Lokalisation des Feuchteschadens vergleichsweise ungenau ist. Zwar kann bei Detektion des Feuchteschadens festgestellt werden, welche Baubahn den die Feuchtigkeit detektierenden Feuchtesensor aufweist. Jedoch kann die Position dieses Feuchtesensors auf der Baubahn nicht näher angegeben werden, da die Messignale aller Feuchtesensoren gemeinsam aufgrund des Messprinzips beim Stand der Technik verarbeitet werden.

Die WO 2019/119007 A1 betrifft einen Baustoff in Rollen- oder Bahnform mit einer Verbundstruktur, die eine erste Lage, eine Trägermateriallage und eine zwischen Trägermateriallage und ersten Lage angeordnete Klebstoffschicht aufweist.

Die US 2023/0048096 A1 betrifft eine Baufolie, insbesondere zur Verwendung im Flachdachbereich, mit einem eine Trägerschicht aufweisenden ein- oder mehrlagigen Schichtaufbau, wobei die Trägerschicht eine Elektronikeinheit und wenigstens ein über die Außenseite der Trägerschicht überstehendes, mit der Elektronikeinheit elektrisch verbundenes erstes Verbindungsmittel aufweist und wobei das erste Verbindungsmittel derart ausgebildet ist, dass die Elektronikeinheit über das erste Verbindungsmittel elektrisch mit einer externen Anschlusseinrichtung, vorzugsweise werkzeuglos, lösbar verbindbar ist.

Aufgabe der vorliegenden Erfindung ist es nun, die vorgenannten Nachteile des Standes der Technik zu vermeiden oder aber zumindest im Wesentlichen zu reduzieren.

Die vorgenannte Aufgabe ist erfindungsgemäß durch eine Baubahn nach Anspruch 1 gelöst.

Die erfindungsgemäße Baubahn weist eine Trägerschicht auf, wobei auf die Außenseite der Trägerschicht eine eine Mehrzahl von Feuchtesensoren aufweisende Elektronikeinheit aufgebracht, bevorzugt aufgedruckt, ist.

Erfindungsgemäß ist der Feuchtesensor als resistiver und/oder kapazitiver Feuchtesensor ausgebildet. Dabei wird der resistive und/oder kapazitive Feuchtesensor durch wenigstens zwei, insbesondere zumindest bereichsweise benachbarte, elektrisch leitfähige Messleiterbahnen zur resistiven und/oder kapazitiven Feuchtemessung gebildet. Zwischen den wenigstens zwei elektrisch leitfähigen Messleiterbahnen kann wenigstens eine Wasserleitung vorgesehen sein. Bei der Wasserleitung handelt es sich um einen Bereich, in dem während des verlegten Zustands der Baubahn Wasser oder Feuchtigkeit auftreten kann. Wenn Wasser bzw. Feuchtigkeit in der Wasserleitung zwischen den elektrisch leitfähigen Messleiterbahnen vorhanden ist, gelingt es, den elektrischen Widerstand bzw. die Kapazität derart zu beeinflussen, dass über den Feuchtesensor eine Detektion von Feuchtigkeit erfolgen kann. In diesem Zusammenhang kann erfindungsgemäß das physikalische Prinzip ausgenutzt werden, dass sich der elektrische Widerstand bzw. die Kapazität beim Eindringen von Wasser und/oder Feuchtigkeit in einer Wasserleitung - die zwischen zwei unmittelbar benachbarten Messleiterbahnen gebildet wird - verändert. Somit wird die Veränderung des ohmschen Widerstandes und/oder der elektrischen Kapazität zum Detektieren der Feuchtigkeit verwendet.

Die Feuchtesensoren sind - wie die Elektronikeinheit, zu der die Feuchtesensoren gehören - auf der Außenseite der Trägerschicht angeordnet, insbesondere auf diese aufgedruckt.

Erfindungsgemäß ist vorgesehen, dass eine Mehrzahl von Sensorgruppen vorgesehen ist. Jede Sensorgruppe wird jeweils durch wenigstens einen Feuchtesensor gebildet. Ein Feuchtesensor kann insbesondere jeweils nur Bestandteil einer Sensorgruppe sein und ist insbesondere nicht mehreren Sensorgruppen zugeordnet.

Die erste Messleiterbahn des Feuchtesensors bzw. alle ersten Messleiterbahnen der Feuchtesensoren sind mit wenigstens einer Zuleitung elektrisch verbunden. Die zweite Messleiterbahn des Feuchtesensors und/oder jede zweite Messleiterbahn jedes Feuchtesensors ist mit einer eine Mehrzahl von Leiterbahnen aufweisenden Leitungseinrichtung elektrisch verbunden.

Somit kann über die wenigstens eine Zuleitung und die Leitungseinrichtung die zur Feuchtemessung benötigte Energie bzw. der hierfür benötigte Strom dem jeweiligen Feuchtesensor bereitgestellt werden. Letztlich gelingt es über die Leitungseinrichtung und die Zuleitung die Feuchtesensoren elektrisch zu kontaktieren und mit Energie bzw. Strom zu versorgen.

Erfindungsgemäß ist vorgesehen, dass jeder Sensorgruppe eine mit der zweiten Messleiterbahn des jeweiligen Feuchtesensors der jeweiligen Sensorgruppe elektrisch verbundene Leitungseinheit der Leitungseinrichtung zugeordnet ist, wobei die einzelnen Leitungseinheiten elektrisch voneinander über wenigstens eine Trennstelle und/oder Trennstellen getrennt sind. Die Trennstellen sind in den jeweiligen Leiterbahnen und/oder in den jeweiligen zweiten Messleiterbahnen vorgesehen. Demnach wird insbesondere jede Sensorgruppe elektrisch mit einer genau dieser Sensorgruppe zugeordneten Leitungseinheit verbunden und mit Energie bzw. Strom für die Feuchtesensoren zur Feuchtemessung versorgt.

In diesem Zusammenhang versteht es sich insbesondere, dass eine Leitungseinheit nur einer Sensorgruppe und nicht mehreren Sensorgruppen zugeordnet ist. Eine Sensorgruppe kann durch einen Feuchtesensor oder durch mehrere Feuchtesensoren gebildet sein. Es kann auch vorgesehen sein, dass bei mehreren Sensorgruppen sich diese voneinander durch eine unterschiedliche Anzahl von Feuchtesensoren unterscheiden.

Die Leitungseinheiten sind insbesondere elektrisch voneinander getrennt bzw. isoliert und insbesondere nicht elektrisch miteinander kontaktierend verbunden. Über die voneinander getrennten elektrischen Leitungseinheiten kann eine separate Stromversorgung der einzelnen Sensorgruppen erfolgen.

Dies ermöglicht den erfindungswesentlichen Vorteil, dass bei Feststellung eines Feuchteschadens bzw. eines Feuchteeintritts über die Leitungseinheiten erkannt werden kann, welche Sensorgruppe den die Feuchtigkeit detektierenden Feuchtesensor aufweist. Da die Sensorgruppen und die dazu gehörigen Leitungseinheiten in ihrer Position bestimmbar sind, kann auf diesem Wege eine Lokalisation des die Feuchtigkeit detektierenden Feuchtesensors erfolgen. Dies ermöglicht es insbesondere, beim Feststellen eines Feuchteschadens gezielt eine Reparatur (beispielweise im Dachaufbau) vornehmen zu können, da der Bereich bzw. der Ort des Feuchteschadens gut lokalisierbar ist.

Die Bereitstellung von Sensorgruppen ermöglicht es auch, bedarfsweise eine engmaschigere oder grobmaschigere Überwachung durchzuführen. Diese Möglichkeit wird dadurch geschaffen, dass die Anzahl der Feuchtesensoren in den Sensorgruppen verändert werden kann. Soll beispielsweise ein Bereich engmaschiger im Hinblick auf eine Lokalisierung der Feuchtesensoren überwacht werden, so können den Sensorgruppen in diesem Bereich weniger Feuchtesensoren zugeordnet werden als Sensorgruppen in einem anderen Bereich, der bedarfsweise eine weniger genaue Lokalisation der Feuchtesensoren benötigt.

Die Trennstellen ermöglichen ferner den erfindungswesentlichen Vorteil, dass die gesamte Elektronikeinheit zunächst aufgebracht, insbesondere aufgedruckt, werden kann und die Trennstellen separat hiervon eingebracht werden können und letztlich insbesondere zur elektrischen Trennung der Leitungseinheiten voneinander führen.

Bevorzugt kann vor Einbringen der Trennstellen vorgesehen sein, dass alle Leitungseinheiten miteinander elektrisch verbunden sind und durch das Einbringen der Trennstellen in den zweiten Messleiterbahnen und/oder den jeweiligen Leiterbahnen eine Trennung in einzelne Leitungseinheiten erfolgen kann.

Ferner wird durch das Einbringen der Trennstellen die Möglichkeit geschaffen, eine an die jeweilige Benutzungssituation angepasste Bereitstellung der Sensorgruppen durchzuführen. Außerdem kann ein sich wiederholendes Muster bzw. Design der Elektronikeinheit genutzt werden, das durch Einbringen der Trennstellen zur Ausbildung der elektrisch voneinander getrennten Leitungseinheiten und der dazugehörigen Sensorgruppen führt. Demnach kann vor Einbringen dieser Trennstellen vorgesehen sein, dass auch keine Sensorgruppen vorhanden bzw. gebildet worden sind.

Letztlich ermöglichen die Trennstellen, dass auf kostengünstige Weise eine Herstellung der die Elektronikeinheit aufweisenden Baubahn erfolgen kann, insbesondere indem die Elektronikeinheit mit einem wiederkehrenden Druckbild und/oder wiederkehrenden Muster auf die Außenseite der Trägerschicht aufgebracht, insbesondere aufgedruckt, werden kann.

Erfindungsgemäß kann somit ein wiederkehrendes Muster bzw. Druckbild und/oder ein wiederkehrendes Design für die Elektronikeinheit insbesondere endlos auf eine Trägerschicht aufgebracht werden, das durch die Trennstellen in einzelne Sensorgruppen und einzelne Leitungseinheiten abgegrenzt werden kann.

Neben der Kosteneinsparung ergibt sich somit eine effiziente Herstellung der Baubahn. Vorteilhaft ist ebenfalls, dass die elektrisch leitfähige Elektronikeinheit nur auf die Außenseite der Trägerschicht und nicht zwingenderweise auf weitere Ebenen oder Schichten aufgebracht werden muss, die aufwendig voneinander elektrisch getrennt werden müssten. Auch dies ergibt eine einfache und kostengünstige Produktion zur Herstellung der Baubahn.

Druckbilder bzw. sogenannte Rapports (der sogenannte Rapportdruck) für die Elektronikeinheit können mit in der Praxis vorhandenen Anlagen bis insbesondere circa 1 m Länge, meistens zwischen circa 0,4 bis 0,6 m Länge, auf die Trägerschicht aufgebracht werden. Somit kann eine Elektronikeinheit, die diese vorgenannte Länge überschreitet, insbesondere nur dann effizient gedruckt werden, wenn diese ein gleiches, sich ständig wiederholendes Design aufweist. Die meisten Feuchtesensoren sind deutlich kleiner als die vorgenannte Länge, so dass dies keine Limitierung darstellt. Bei Elektronikeinheiten für Baubahnen, die für größere Überwachungsbereiche, wie Dächer, Fassaden und Nassräume, ausgelegt und genutzt werden sollen, ist auch eine großflächige Bereitstellung der die Feuchtesensoren aufweisende Elektronikeinheit mit Längen von mehreren Metern für die Baubahn vorzusehen. Dann ist ein wiederkehrendes Design vorteilhaft, da stets dasselbe Druckbild (das eine geringere Länge als die Länge der Baubahn aufweist) genutzt werden kann, wobei die Druckbilder insbesondere unmittelbar ineinander übergehen und letztlich die elektrische Kontaktierung der einzelnen Sensorgruppen dann über die durch die Trennstellen voneinander getrennten Leitungseinheiten erfindungsgemäß realisiert werden kann.

Besonders bevorzugt wird demnach die Elektronikeinheit im Rapportdruck auf die Außenseite der Trägerschicht aufgebracht.

Die Trennstellen können insbesondere auch als Löcher bzw. nicht bedruckte Bereiche bezeichnet werden.

Über die Trennstellen kann letztlich bestimmt werden, welche Leiterbahnen elektrisch kontaktierend mit welcher Sensorgruppe bzw. welchen Feuchtesensoren verbunden werden sollen, wodurch die elektrische Kontaktierung der zweiten Messleiterbahn der Feuchtesensoren vorgegeben werden kann.

Insgesamt ist festzustellen, dass mit der erfindungsgemäßen Baubahn ein wiederkehrendes Design für die Elektronikeinheit, insbesondere für die Feuchtesensoren, genutzt werden kann, das für verschiedene Anordnungen von Sensorgruppen genutzt werden kann und gleichzeitig insbesondere bevorzugt auch eine räumliche Zuordnung der Feuchtesensoren bzw. der die Feuchtigkeit detektierenden Sensoren erlaubt.

Besonders vorteilhaft ist, dass erfindungsgemäß mit nur einer elektrischen Funktionsebene bzw. einer Elektronikeinheit ausgekommen werden kann, da insbesondere eine Bereitstellung der Elektronikeinheit in voneinander elektrisch isolierten Schichten nicht mehr benötigt wird.

Die Anordnung der Sensorgruppen kann somit beliebig in Abhängigkeit der Benutzungssituation und in Abhängigkeit der unterschiedlichen Anwendungsbedürfnisse vorgegeben werden.

Erfindungsgemäß gelingt es insbesondere, einen gedruckten Feuchtesensor bereitzustellen. So wird insbesondere ermöglicht, die Herstellungskosten für eine erfindungsgemäße Baubahn im Vergleich zum Stand der Technik drastisch zu reduzieren, da der Feuchtesensor letztlich während der Herstellung der Baubahn, vorzugsweise im Inline-Verfahren, hergestellt werden kann.

Insbesondere kann der Feuchtesensor gemeinsam mit den weiteren Bestandteilen der Elektronikeinheit, bevorzugt der Zuleitung und/oder den Leiterbahnen auf die Trägerschicht aufgebracht, bevorzugt aufgedruckt, werden.

Vorteilhafterweise kann mit der erfindungsgemäßen Baubahn unter wirtschaftlichen Gesichtspunkten, insbesondere im Flachdachbereich, eine Überwachung der Feuchtigkeit im Dachaufbau sichergestellt werden. So kann rechtzeitig das unerwünschte Eindringen von Feuchtigkeit im Dachaufbau erkannt werden, so dass insbesondere langfristige Schäden aufgrund eines Wasserschadens verhindert werden können.

Auch kann vermieden werden, dass eine nicht korrekt funktionierende Baubahn eingesetzt wird, die im Schadenfall bzw. bei eintretender Feuchtigkeit die Feuchtigkeit nicht detektieren kann. Die Sicherheit wird folglich durch die erfindungsgemäße Baubahn erhöht.

Dadurch, dass der erfindungsgemäße Feuchtesensor insbesondere gedruckt wird, kann eine Mehrzahl von Feuchtesensoren über die Länge der Baubahn mit geringen Herstellungskosten bereitgestellt werden. Dies ermöglicht eine vergleichsweise genaue Detektion eines Lecks, da die Stelle bzw. der Ort des Eindringens von Wasser über die Bestimmung des die Feuchtigkeit detektierenden Feuchtesensors ermittelbar ist.

Des Weiteren weist die erfindungsgemäße Elektronikeinheit eine hohe mechanische Stabilität auf, insbesondere wobei die Elektronikeinheit auch aufrollbar und/oder knickbar ausgebildet ist, was insbesondere eine einfache Verlegung der Baubahn ermöglicht.

Erfindungsgemäß ist vorgesehen, dass die Trennstelle als Unterbrechung der Leiterbahn und/oder der zweiten Messleiterbahn ausgebildet ist. Die Unterbrechung kann auch als Durchtrennungsstelle und/oder Loch bezeichnet werden. Eine Unterbrechung ermöglicht es letztlich, dass durch die Trennstellen die Leiterbahn in wenigstens zwei voneinander unabhängige Leiterbahnabschnitte unterteilt werden kann, die auch nicht elektrisch miteinander kontaktierend verbunden sind. Dadurch gelingt es, dass trotz vorhandener mehrerer Leiterbahnen und mehrerer zweiter Messleiterbahnen durch die Trennstellen eine elektrische Isolierung der einzelnen Leitungseinheiten voneinander gewährleistet werden kann.

Vorzugsweise sind die Feuchtesensoren einer Sensorgruppe parallel geschaltet. Demnach können die Feuchtesensoren einer Sensorgruppe insbesondere durch eine gemeinsame Zuleitung und eine gemeinsame Leitungseinheit mit elektrischer Energie bzw. Strom versorgt werden. Eine Parallelschaltung ermöglicht es dabei, dass bei Feststellung eines Feuchteschadens die Leitungseinheit erkennt, in welcher Sensorgruppe der Feuchteschaden vorliegt. So kann eine aufwendige individuelle elektrische Verbindung einzelner Sensoren vermieden werden.

Wie zuvor erläutert, kann durch das Einbringen von Trennstellen in den Leiterbahnen eine Bereitstellung von voneinander elektrisch isolierten Leiterbahnabschnitten erfolgen. Besonders bevorzugt ist vorgesehen, dass wenigstens eine Leiterbahn einen mit einer elektrischen Verbindungseinrichtung der Baubahn verbindbaren Hauptleiterbahnabschnitt und wenigstens einen von dem Hauptleiterbahnabschnitt dieser Leiterbahn über eine Trennstelle getrennten Nebenleiterbahnabschnitt aufweist. Insbesondere kann die wenigstens eine Leiterbahn eine Mehrzahl von Nebenleiterbahnabschnitten aufweisen, wobei die Nebenleiterbahnabschnitte der jeweiligen Leiterbahnen voneinander jeweils durch wenigstens eine, bevorzugt in der Leiterbahn vorgesehene, Trennstelle voneinander getrennt sind.

Besonders bevorzugt weist jede Leiterbahn zumindest einen Hauptleiterbahnabschnitt und bedarfsweise wenigstens einen oder eine Mehrzahl von Nebenleiterbahnabschnitten auf. Eine Leiterbahn umfasst aber insbesondere nicht mehr als einen Hauptleiterbahnabschnitt.

Der Hauptleiterbahnabschnitt einer Leiterbahn wird einer Leitungseinheit zugeordnet und dient letztlich zur Strom- bzw. Energieversorgung einer Sensorgruppe. Die Strom- bzw. Energieversorgung kann durch Anschluss der Hauptleiterbahnabschnittes an eine Verbindungseinrichtung, die wiederum auch mit elektrischer Energie bzw. Strom versorgbar ist, erfolgen.

Die Unterteilung der Leiterbahnen in Hauptleiterbahnabschnitte und Nebenleiterbahnabschnitte, die voneinander elektrisch über die Trennstellen getrennt sind, ermöglicht es, dass eine Leiterbahn mit unterschiedlichen Leiterbahnabschnitten zu mehreren Sensorgruppen verbunden sein kann. Dabei ist der Hauptleiterbahnabschnitt einer Leiterbahn somit zu einer Sensorgruppe und auch bedarfsweise ein einzelner Nebenleiterbahnabschnitt derselben Leiterbahn zu einer anderen Sensorgruppe verbunden.

Dadurch, dass die Leiterbahn jedoch einen Hauptleiterbahnabschnitt und bedarfsweise mehrere Nebenleiterbahnabschnitte aufweisen kann, kann eine einzelne Leiterbahn auch zu mehreren Sensorgruppen elektrisch verbunden werden, wobei diese Verbindung jedoch nicht die elektrische Isolation der unterschiedlichen Leitungseinheiten voneinander beeinträchtigt. Letztlich wird die Leiterbahn durch das Einbringen von Trennstellen in einzelne voneinander elektrisch getrennte Leiterbahnabschnitte aufgeteilt.

Bei einer weiteren bevorzugten Ausführungsform ist vorgesehen, dass wenigstens einer Leitungseinheit ein Hauptleiterbahnabschnitt einer Leiterbahn und wenigstens ein Nebenleiterbahnabschnitt wenigstens einer anderen Leiterbahn zugeordnet ist. Dies ermöglicht die vorgenannte Zuordnung von mehreren Leiterbahnabschnitten verschiedener Leiterbahnen zu einer einzelnen Sensorgruppe. Die Leitungseinheit umfasst dabei wenigstens einen Hauptleiterbahnabschnitt und bedarfsweise einen oder mehrere Nebenleiterabschnitte anderer Leiterbahnen. Der Nebenleiterbahnabschnitt derjenigen Leiterbahn, die den Hauptleiterbahnabschnitt der jeweiligen Leitungseinheit aufweist, ist nicht Teil dieser den Hauptleiterbahnabschnitt aufweisenden Leitungseinheit, sondern wird einer anderen Leitungseinheit zugeordnet. Dies ermöglicht es trotz mehrerer vorzugsweise parallel zueinander verlaufender Leiterbahnen eine voneinander unabhängige elektrische Kontaktierung der einzelnen Sensorgruppen zu ermöglichen, was letztlich zur erfindungsgemäß sichergestellten Lokalisation der einen Feuchteschaden detektierenden Feuchtesensoren führen kann.

Bei einer weiteren bevorzugten Ausgestaltung des Erfindungsgedankens ist vorgesehen, dass wenigstens eine zweite Messleiterbahn eines Feuchtesensors einer jeweiligen Sensorgruppe elektrisch mit dem Hauptleiterbahnabschnitt der der Sensorgruppe dieses Feuchtesensors zugeordneten Leitungseinheit verbunden ist und wenigstens einen Nebenleiterbahnabschnitt dieser zugeordneten Leitungseinheit kreuzt und elektrisch mit dieser verbunden ist. Die zweite Messleiterbahn kann folglich zur elektrischen Verbindung des wenigstens einen Nebenleiterbahnabschnittes und des Hauptleiterbahnabschnittes derselben Leitungseinheit dienen. In diesem Zusammenhang ist besonders bevorzugt, wenn derjenige Abschnitt der zweiten Messleiterbahn, der zur Kontaktierung des Hauptleiterbahnabschnittes vorgesehen ist, zumindest im Wesentlichen orthogonal zu dem Hauptleiterbahnabschnitt oder zumindest einem Bereich des Hauptleiterbahnabschnittes verläuft. Insbesondere verlaufen die Leiterbahnen und somit auch der Hauptleiterbahnabschnitt zumindest im Wesentlichen in Längsrichtung der Baubahn, wobei zumindest ein Abschnitt der zweiten Messleiterbahn besonders bevorzugt zumindest im Wesentlichen in Querrichtung, die orthogonal zur Längsrichtung der Baubahn ausgerichtet ist, verlaufen kann.

Die Längsrichtung der Baubahn wird insbesondere durch die Richtung der größten Erstreckung der Baubahn angegeben.

Die zweite Messleiterbahn kann vorzugsweise von wenigstens einem Hauptleiterbahnabschnitt einer anderen Leitungseinheit durch wenigstens eine Trennstelle, bevorzugt in der zweiten Messleiterbahn, elektrisch getrennt sein. Demnach kann zur elektrischen Trennung der Leitungseinheiten untereinander auch eine Trennstelle in der zweiten Messleiterbahn vorteilhaft sein. Vor Einbringen der Trennstellen kann insbesondere vorgesehen sein, dass die zweite Messleiterbahn alle Leiterbahnen kreuzt und elektrisch mit diesen verbunden ist und durch Einbringen der Trennstellen insbesondere zu dem Hauptleiterbahnabschnitt der diesem Feuchtesensor zugeordneten Leitungseinheit und bedarfsweise zu wenigstens einem Nebenleiterbahnabschnitt elektrisch verbunden ist und diesen kreuzt und zu anderen Leiterbahnabschnitten, die nicht Teil der dem Feuchtesensor bzw. der den Feuchtesensor aufweisenden Sensorgruppe zugeordneten Leitungseinheit sind, elektrisch getrennt ist.

Von weiteren Nebenleiterbahnabschnitten, die nicht Teil der dem Feuchtesensor der zweiten Messleiterbahn zugeordneten Leitungseinheit sind, kann insbesondere die zweite Messleiterbahn dieses Feuchtesensors ebenfalls durch Trennstellen, bevorzugt in den jeweiligen Leiterbahnen, elektrisch getrennt sein. Folglich ist die zweite Messleiterbahn elektrisch insbesondere nur mit der Hauptleiterbahn und mit bedarfsweise vorgesehenen Nebenleiterbahnabschnitten der dieser zweiten Messleiterbahnen zugeordneten Leitungseinheit elektrisch verbunden und weiter bevorzugt zu anderen Nebenleiterbahnabschnitten anderer Leitungseinheiten und/oder anderer Hauptleiterbahnabschnitten anderer Leitungseinheiten durch Trennstellen elektrisch getrennt.

Bei einer weiteren bevorzugten Ausführungsform der Erfindung ist vorgesehen, dass ein Nebenleiterbahnabschnitt einer Leitungseinheit alle zweiten Messleiterbahnen der der Leitungseinheit zugeordneten Sensorgruppe kreuzt und elektrisch mit diesen zweiten Messleiterbahnen dieser Leitungseinheit verbunden ist. Demnach können alle zweiten Messleiterbahnen der Feuchtesensoren ein und derselben Sensorgruppe mit demselben Nebenleiterbahnabschnitt einer Leiterbahn des der Sensorgruppe zugeordneten Leitungseinheit verbunden sein.

Bevorzugt ist vorgesehen, dass alle Nebenleiterbahnabschnitte der der Sensorgruppe zugeordneten Leitungseinheit elektrisch kontaktierend mit einer zweiten Messleiterbahn der Feuchtesensoren der jeweiligen Sensorgruppe elektrisch verbunden sind. Insbesondere kreuzt der Nebenleiterbahnabschnitt einer Leitungseinheit alle zweiten Messleiterbahnen der der Leitungseinheit zugeordneten Sensorgruppe, insbesondere wodurch sich die elektrische Verbindung ergibt.

Bei einer alternativen Ausführungsform kann vorgesehen sein, dass ein Nebenleiterbahnabschnitt einer Leitungseinheit wenigstens, insbesondere nur, eine zweite Messleiterbahn der der Leitungseinheit zugeordneten Sensorgruppe kreuzt und elektrisch mit dieser verbunden ist. Somit kann eine Leiterbahn eine Mehrzahl von Nebenleiterbahnabschnitten derselben Leitungseinheit für unterschiedliche zweite Messleiterbahnen der jeweiligen Sensorgruppe aufweisen. Sind beispielsweise drei Feuchtesensoren je Sensorgruppe vorgesehen, so kann eine Leitungseinheit für diese Sensorgruppe auch drei Nebenleiterbahnabschnitte je Leiterbahn dieser der Leiterbahn zugeordneten Leitungseinheit aufweisen. Die Nebenleiterbahnabschnitte sind dabei insbesondere voneinander elektrisch durch Trennstellen getrennt.

Demnach kann eine Leiterbahn im Bereich einer einzelnen Leitungseinheit entweder in einen Nebenleiterbahnabschnitt oder in mehrere Nebenleiterbahnabschnitte, insbesondere in Abhängigkeit der Anzahl der Feuchtesensoren in der Sensorgruppe, durch die Trennstellen aufgegliedert werden. Eine Trennung in eine Vielzahl von Nebenleiterbahnabschnitten ergibt dabei eine geringe Fehleranfälligkeit, da sichergestellt werden kann, dass ein ungewünschtes Kontaktieren des Feuchtesensors durch andere Leitungseinheiten vermieden werden kann.

Darüber hinaus ist bei einer weiteren bevorzugten Ausführungsform vorgesehen, dass die Hauptleiterbahnabschnitte und/oder die Zuleitung zu der externen Anschlusseinrichtung elektrisch über jeweils wenigstens ein Verbindungsmittel der Verbindungseinrichtung verbindbar sind. Das Verbindungsmittel kann zu einem weiteren Verbindungsmittel der Anschlusseinrichtung komplementär ausgebildet und mit dem weiteren Verbindungsmittel formschlüssig und/oder reibschlüssig und/oder verrastbar verbindbar sein. Die vorgenannte Verbindung stellt eine vergleichsweise einfache Möglichkeit dar, die Baubahn und die Elektronikeinheit der Baubahn mit Energie bzw. Strom zu versorgen. Dabei muss kein Energiespeicher der Baubahn zugeordnet sein, sondern die externe elektrische Kontaktierung der Baubahn kann über Verbindung zwischen der Verbindungseinrichtung und der Anschlusseinrichtung erfolgen. Hierzu können dann die ersten und weiteren Verbindungsmittel entsprechend miteinander elektrisch verbunden werden und somit eine Energiezuführung zu den einzelnen Feuchtesensoren der Elektronikeinheit sicherstellen. Insbesondere kann die vorgenannte Verbindung werkzeuglos erfolgen und eine dauerhafte elektrische Kontaktierung gewährleisten.

Vorzugsweise ist vorgesehen, dass die Zuleitung, die Leitungseinrichtung und/oder die Leiterbahn der Leitungseinrichtung auf die Außenseite der Trägerschicht aufgebracht, insbesondere aufgedruckt, sind. Ein Aufdrucken der vorgenannten Komponenten ergibt die bereits diskutierten Vorteile eines sich wiederholenden Druckbildes und einer einfachen Herstellung der Elektronikeinheit. Insbesondere sind die Trennstellen nach dem Aufbringen, bevorzugt Aufdrucken, der Elektronikeinheit herstellbar. Wie zuvor dargelegt worden ist, kann insbesondere die Elektronikeinheit im Rapportdruck hergestellt werden. Durch das nachträgliche Einbringen der Trennstellen kann dann eine Vorgabe der Sensorgruppen und der dazugehörigen Leitungseinheiten erfolgen, die entsprechend im Druckbild durch das Einbringen von Trennstellen in den zweiten Messleiterbahnen und/oder Leiterbahnen in die erfindungsgemäße Sensorstruktur ausgebildet werden können. Dabei ist vorteilhaft, dass ein wiederkehrendes Design im Druckbild für die Elektronikeinheit verwendet werden kann, das allerdings durch Einbringen der Trennstellen in unterschiedliche Leitungseinheiten für unterschiedliche Feuchtesensoren überführt werden kann.

Bei einer weiteren bevorzugten Ausführungsform des Erfindungsgedankens ist vorgesehen, dass wenigstens eine Sensorgruppe, insbesondere alle Sensorgruppen, eine Mehrzahl von Feuchtesensoren, bevorzugt zwischen 2 bis 20, weiter bevorzugt zwischen 3 bis 10, aufweist. Wie zuvor erläutert, kann auch vorgesehen sein, dass sich wenigstens zwei Sensorgruppen der Baubahn voneinander durch eine unterschiedliche Anzahl an Feuchtesensoren unterscheiden können. Die Bereitstellung der Feuchtesensoren und der jeweiligen Sensorgruppen auf der Baubahn kann in Abhängigkeit der jeweils vorgesehenen Anwendung und/oder Kundenbedürfnisse oder dergleichen ausgewählt sein.

Besonders bevorzugt sind die Feuchtesensoren aller Sensorgruppen mit der gleichen Zuleitung verbunden. Insbesondere sind alle ersten Messleiterbahnen und alle Feuchtesensoren mit der gleichen Zuleitung verbunden. Demnach ist insbesondere nur eine Zuleitung vorgesehen. Die Feuchtesensoren können folglich mit der ersten Leiterbahn mit der Zuleitung und mit den zweiten Messleiterbahnen mit den jeweiligen Leitungseinheiten aufweisend einen Hauptleiterbahnabschnitt und bedarfsweise wenigstens einen Nebenleiterbahnabschnitt elektrisch kontaktierend zur Strom- bzw. Energieversorgung der Feuchtesensoren verbunden sein.

Bei einer weiteren bevorzugten Ausführungsform ist ein wenigstens die Trägerschicht und eine wasserdurchlässige, vorzugsweise wasseraufnehmende, Textilschicht aufweisender mehrlagiger Schichtaufbau vorgesehen. Demnach kann insbesondere die Elektronikeinheit der Trägerschicht zugeordnet werden. Die Textilschicht kann insbesondere dazu vorgesehen sein, die Feuchtigkeit zu den Feuchtesensoren zu transportieren. So kann die Textilschicht auch sicherstellen, dass mit einer hohen Genauigkeit ein Feuchteschaden detektiert werden kann, da insbesondere auch Feuchtigkeit, die nicht unmittelbar am Feuchtesensor anliegt, über die Textilschicht und durch entsprechendes Ausbreiten der Feuchtigkeit in der Textilschicht wenigstens einem Feuchtesensor zugeführt werden kann.

Besonders bevorzugt ist dabei die Textilschicht in Kontakt zu der Elektronikeinheit und/oder den Feuchtesensoren. Ferner kann die Textilschicht unmittelbar oder mittelbar an der Elektronikeinheit bzw. den Feuchtesensoren anliegen, insbesondere aber derart, dass in der Textilschicht vorhandene Feuchtigkeit über den Feuchtesensor detektierbar ist. Alternativ oder zusätzlich kann vorgesehen sein, dass die Elektronikeinheit zwischen der Trägerschicht und der Textilschicht vorgesehen ist, wobei zwischen der Textilschicht und der Elektronikeinheit eine Klebeschicht zur stoffschlüssigen Verbindung der Textilschicht mit der Elektronikeinheit vorgesehen ist.

Vorzugsweise weist die Leiterbahn und/oder die Zuleitung und/oder die Messleiterbahnen eine Materialdicke von 1 bis 50 µm, bevorzugt von 1 bis 25 µm, auf. Materialdicken der vorgenannten Art ermöglichen, dass insbesondere bei der Baubahn keine störenden Reliefkonturen der Elektronikeinheit wahrnehmbar sind und ein vergleichsweise sicheres und zielgerichtetes Aufbringen, bevorzugt Aufdrucken, der Elektronikeinheit erfolgen kann.

Alternativ oder zusätzlich kann vorgesehen sein, dass die Leiterbahn und/oder die Zuleitung und/oder die Messleiterbahn eine Breite von 0,1 bis 8 mm, bevorzugt von 0,3 bis 2 mm, aufweist/aufweisen.

Darüber hinaus ist bei einer weiteren bevorzugten Ausgestaltung des Erfindungsgedankens vorgesehen, dass die wenigstens zwei Messleiterbahnen des Feuchtesensors an ihren einander zugewandten Enden zur Bildung eines Sensorbereichs zumindest bereichsweise miteinander kämmen. Alternativ oder zusätzlich kann vorgesehen sein, dass die wenigstens zwei Messleiterbahnen des Feuchtesensors jeweils eine Mehrzahl von abstehenden Fingern aufweisen, wobei, vorzugsweise, die Finger der Messleiterbahnen ineinandergreifen und/oder miteinander kämmen können. Insbesondere kann zwischen zwei unmittelbar benachbarten Fingern der Messleiterbahnen die wenigstens eine Wasserleitung zur resistiven Feuchtemessung vorgesehen sein. So kann insbesondere eine zumindest im Wesentlichen labyrinthartige Struktur des Feuchtesensors erhalten werden.

Insbesondere ist der Feuchtesensor als ein gerundetes, insbesondere zumindest im Wesentlichen kreisförmiges, Sensorfeld ausgebildet. Aber auch andere Formen des Sensorfeldes sind möglich. Jedenfalls sollte gewährleistet sein, dass die wenigstens zwei Messleiterbahnen miteinander kämmend in einem Sensorfeld angeordnet sind.

Bei einer weiteren bevorzugten Ausführungsform ist vorgesehen, dass der, insbesondere minimale, Abstand unmittelbar benachbarter Finger des Sensorfeldes und/oder die, insbesondere maximale, Breite wenigstens einer zwischen den wenigstens zwei Messleiterbahnen gebildeten Wasserleitung weniger als 1 cm, bevorzugt weniger als 0,5 cm, weiter bevorzugt weniger als 0,3 cm, vorzugsweise zwischen 1 mm bis 10 mm, beträgt. Letztlich kann auch die Breite zwischen den unmittelbar benachbarten Fingern der Messleiterbahnen variieren. Insbesondere ist der Abstand derart gewählt, dass die resistive Feuchtemessung bei Eindringen von Feuchtigkeit und/oder Wasser in die Wasserleitung durch die Veränderung des ohmschen Widerstandes von dem Feuchtesensor detektiert werden kann.

Insbesondere kann sich die Sensorgruppe über jeweils eine Länge der Baubahn von wenigstens 0,2 m, bevorzugt zwischen 0,3 bis 5 m, weiter bevorzugt zwischen 0,5 bis 3 m, erstrecken. Die vorgenannte Länge der Baubahn stellt sicher, dass eine bestmögliche Abdeckung des zu überwachenden Bereichs mit den Sensorgruppen erfolgen kann. Die Länge des Sensorfeldes kann anhand der gewünschten Maschenbreite für den überwachenden Bereich und der gewünschten Lokalisierbarkeit der Feuchtesensoren erfolgen. Insbesondere ist der Feuchtesensor im Bereich der durch die Sensorgruppe eingenommenen Breite der Baubahn lokalisierbar.

Ferner können unmittelbar benachbarte Feuchtesensoren einer Sensorgruppe einen Abstand zwischen 10 cm bis 5 m, bevorzugt zwischen 20 cm bis 3 m, weiter bevorzugt zwischen 40 cm bis 1,5 m, aufweisen. Alternativ oder zusätzlich kann vorgesehen sein, dass der Abstand unmittelbar benachbarter Feuchtesensoren wenigstens 5 cm, bevorzugt wenigstens 10 cm, weiter bevorzugt wenigstens 20 cm und/oder kleiner als 5 m, bevorzugt kleiner als 3 m, weiter bevorzugt kleiner als 1,5 m, ausgebildet ist. Der Abstand der Feuchtesensoren kann insbesondere von der gewünschten Genauigkeit der Lokalisation eines möglichen Lecks in dem Dachaufbau abhängig sein. Je engmaschiger die Feuchtesensoren angeordnet sind, desto genauer kann ein Leck erkannt werden. Erfindungsgemäß gelingt es jedoch auch bei einem größeren Abstand unmittelbar benachbarter Feuchtesensoren zumindest im Wesentlichen sicher, das Eindringen von Feuchtigkeit im Bereich der Baubahn zu detektieren, indem der Feuchtetransport innerhalb der Textilschicht genutzt werden kann.

Die Feuchtesensoren können besonders bevorzugt zueinander gleich beabstandet sein. Alternativ oder zusätzlich kann vorgesehen sein, dass zumindest die Feuchtesensoren einer Sensorgruppe innerhalb dieser Sensorgruppe zumindest im Wesentlichen gleich beabstandet sind.

Bei einer weiteren bevorzugten Ausführungsform kann vorgesehen sein, dass die Textilschicht als Vliesschicht, bevorzugt als thermisch verfestigte und/oder nadel- und/oder nassstrahlverfestigte Vliesschicht, ausgebildet ist. Ferner kann die Textilschicht alternativ oder zusätzlich ein polyolefinisches Vlies, ein Naturfaservlies, ein Polypropylen-Spinnvlies, ein Polyamid-Vlies, ein Polylactide-Vlies (PLA-Vlies) und/oder ein Polyethylenterephthalat-Vlies aufweisen und/oder als Stapelvlies und/oder als engmaschiges Gewirke hergestellt sein.

Zudem kann die, bevorzugt als Vliesschicht ausgebildete, Textilschicht insbesondere hydrophile Fasern - das heißt insbesondere wasseraufnehmende Fasern - aufweisen. Insbesondere kann die Textilschicht aus hydrophilen Fasern, die insbesondere Polyethylenterephthalat (PET) aufweisen, aufgebaut sein. Alternativ oder zusätzlich kann vorgesehen sein, dass die Fasern der Textilschicht eine hydrophile Beschichtung aufweisen, insbesondere wobei die Fasern als Material Polyethylenterephthalat (PET) aufweisen und/oder daraus bestehen. Die hydrophile Beschichtung kann demzufolge sicherstellen, dass ein wirksamer Feuchtetransport längs der Textilschicht gewährleistet werden kann.

Durch die hydrophile Ausbildung der Textilschicht wird insbesondere ermöglicht, dass der Feuchtetransport und/oder der Wassertransport längs der Textilschicht im Vergleich zu im Stande der Technik bekannten Fliesen verbessert werden kann. So kann auch die erfindungsgemäße Detektion von Feuchtigkeit und/oder Wasser dahingehend verbessert werden, dass bereits eine geringe Menge von Feuchtigkeit und/oder Wasser, die an der Textilschicht anliegt, von dem erfindungsgemäßen Feuchtesensor erkannt werden kann.

Bei einer weiteren bevorzugten Ausgestaltung der Erfindung ist vorgesehen, dass die Breite der Trägerschicht nicht der Breite der Textilschicht entsprechen muss. So kann sich die Trägerschicht letztlich nur über einen Teil der Breite der Textilschicht erstrecken. Insbesondere ist jedoch vorgesehen, dass die Trägerschicht und die Textilschicht eine langgestreckte Form und insbesondere die gleiche Länge aufweisen.

Vorzugsweise erstreckt sich die Breite der Trägerschicht über wenigstens 3 %, bevorzugt zwischen 3 % bis 50 %, weiter bevorzugt zwischen 5 % bis 25 % und insbesondere zwischen 8 % bis 16 %, der Breite der Textilschicht.

Bei einer weiteren bevorzugten Ausführungsform ist vorgesehen, dass der Schichtaufbau wenigstens eine weitere Schicht zur Ausbildung der Baubahn als Dachbahn, Dachfolie, Flachdachbahn, Fassadenbahn und/oder Dampfbremse und/oder Unterdachbahn, insbesondere Unterdeck- und/oder Unterspannbahn, aufweist. Die wenigstens eine weitere Schicht kann insbesondere als Funktionsschicht ausgebildet sein. Die wenigstens eine weitere Schicht kann sich insbesondere über die Breite der Trägerschicht und/oder über die Breite der Textilschicht erstrecken.

Insbesondere ist vorgesehen, dass die weitere Schicht an der der Textilschicht gegenüberliegenden Seite der Baubahn angeordnet ist. Alternativ oder zusätzlich kann die weitere Schicht auch an der der Elektronikeinheit abgewandten Seite der Trägerschicht angeordnet sein. Die weitere Schicht kann diffusionsdicht, diffusionshemmend, wasserdampfdurchlässig und/oder wasserdicht ausgebildet sein. Letztlich ist die weitere Schicht insbesondere in Abhängigkeit der Ausbildung der Baubahn als Dachbahn, insbesondere Flachdachbahn, ausgewählt. Ist die Baubahn als Flachdachbahn ausgebildet, wird insbesondere bevorzugt, dass die weitere Schicht als Funktionsschicht diffusionsdicht und/oder diffusionssperrend ausgebildet ist.

Darüber hinaus ist bei einer weiteren bevorzugten Ausführungsform vorgesehen, dass die Trägerschicht eine Breite zwischen 1 bis 100 cm, bevorzugt zwischen 10 bis 50 cm, weiter bevorzugt zwischen 13 bis 20 cm, aufweist. Alternativ oder zusätzlich kann vorgesehen sein, dass die Textilschicht eine Breite zwischen 0,1 bis 3 m, bevorzugt zwischen 0,1 bis 0,3 m, aufweist. Vorzugsweise haben die Trägerschicht und die Textilschicht die gleiche Länge und/oder verlaufen beide in Längsrichtung und/oder sind langgestreckt ausgebildet. Die Länge der Baubahn und/oder der Trägerschicht und/oder der Textilschicht kann zwischen 0,5 m bis 50 m, bevorzugt zwischen 3 m bis 20 m, betragen.

Bei einer besonders bevorzugten Ausführungsform ist vorgesehen, dass das erste Verbindungsmittel als Verbindungsmittel eines komplementären, vorzugsweise zerstörungsfrei und/oder werkzeuglos lösbaren, Verbindungssystems ausgebildet ist. Als Verbindungssystem kann bevorzugt eine Druckknopfverbindung, eine druccknopfähnliche Verbindung, eine Klettverschlussverbindung und/oder eine Klebeverbindung vorgesehen sein. Das erste Verbindungsmittel kann demzufolge als sogenanntes männliches und/oder weibliches Verbindungsmittel des komplementären Verbindungssystems ausgebildet sein und mit dem zweiten Verbindungsmittel des Verbindungssystems, das an der externen Anschlusseinrichtung angeordnet sein kann, zusammenwirken. Dabei können das erste Verbindungsmittel und das zweite Verbindungsmittel der Anschlusseinrichtung, vorzugsweise werkzeuglos, lösbar zur elektrischen Verbindung und zur elektrischen Anbindung miteinander verbunden werden.

Die vorgenannten Verbindungssysteme ermöglichen ein eine insbesondere flache und/oder eine geringe Aufbauhöhe aufweisendes Verbindungssystem. Die geringe Aufbauhöhe zeichnet sich dadurch aus, dass die Elektronikeinheit im Dachbereich bzw. innerhalb einer Gebäudehülle eingesetzt wird, wobei am Einbauort ein möglichst flacher Aufbau aufgrund einer beschränkten Kapazität vorteilhaft ist. Das einfache Lösen wird durch die nahezu intuitiv verwendbaren Verbindungssysteme ermöglicht. Eine vergleichsweise schnelle Installation kann somit "Hand in Hand" mit einem reversibel lösbaren und insbesondere werkzeuglos lösbaren Verbindungssystem einhergehen.

Des Weiteren betrifft die vorliegende Erfindung ein Verfahren zur Herstellung einer Baubahn. Die Baubahn ist insbesondere zur Verwendung als Dachbahn vorgesehen und wird nach einem der vorgenannten Ausführungsformen ausgebildet. Die Baubahn weist eine Trägerschicht auf, wobei auch die Außenseite der Trägerschicht erfindungsgemäß eine Elektronikeinheit aufweisend eine Mehrzahl von eine erste und eine zweite Messleiterbahn zur resistiven und/oder kapazitiven Feuchtemessung aufweisende Feuchtesensoren angeordnet, bevorzugt aufgedruckt, wird.

Erfindungsgemäß ist bei dem Verfahren vorgesehen, dass eine Mehrzahl von wenigstens durch einen Feuchtesensor gebildete Sensorgruppen vorgesehen wird bzw. vorgesehen ist, wobei die erste Messleiterbahn des Feuchtesensors mit wenigstens einer Zuleitung elektrisch verbunden wird. Insbesondere werden alle ersten Messleiterbahnen der Feuchtesensoren elektrisch mit wenigstens einer Zuleitung verbunden.

Die zweite Messleiterbahn des Feuchtesensors ist mit einer Mehrzahl von Leiterbahnen aufweisenden Leitungseinrichtung elektrisch verbunden.

Die vorgenannten elektrischen Verbindungen können insbesondere bereits bei Herstellung der Elektronikeinheit ausgebildet werden.

Erfindungsgemäß wird jeder Sensorgruppe eine mit der zweiten Messleiterbahn des jeweiligen Feuchtesensors der jeweiligen Sensorgruppe elektrisch verbundene Leitungseinheit der Leitungseinrichtung zugeordnet, wobei die einzelnen Leitungseinheiten elektrisch voneinander über wenigstens eine Trennstelle und/oder Trennstellen, nämlich in den jeweiligen Leiterbahnen und/oder in den jeweiligen zweiten Messleiterbahnen, getrennt werden, wobei die Trennstelle als Unterbrechung der Leiterbahn und/oder der zweiten Messleiterbahn ausgebildet ist.

Im Hinblick auf Ausführungen zu Vorteilen und/oder bevorzugten Ausführungsformen des erfindungsgemäßen Verfahrens darf auf die vorgenannten Ausführungen zur erfindungsgemäßen Baubahn verwiesen werden, die in gleicher Weise auch für das erfindungsgemäße Verfahren gelten, ohne dass dies einer weiteren expliziten Erläuterung bedarf. Auch vorgenannte bevorzugte Ausführungsformen der erfindungsgemäßen Baubahn können in gleicher Weise auch auf das erfindungsgemäße Verfahren übertragen werden. Insbesondere können auch Ausführungen zu dem erfindungsgemäßen Verfahren in gleicher Weise für die erfindungsgemäße Baubahn gelten, ohne dass dies einer weiteren expliziten Erläuterung bedarf.

Bei einer besonders bevorzugten Ausführungsform des Verfahrens ist vorgesehen, dass die Trennstellen nach Aufbringen, insbesondere Aufdrucken, der Elektronikeinheit durch Entfernung von elektrisch leitfähigem Material hergestellt werden, insbesondere durch Laserschneiden.

Die vorgenannte Ausbildung ermöglicht es, dass die Trennstellen bei einem insbesondere wiederkehrendem Muster der Elekronikeinheit gezielt in die Elektronikeinheit zur Bildung der getrennten Leitungseinheiten und/oder der voneinander elektrisch getrennten Sensorgruppen eingebracht werden.

Alternativ oder zusätzlich kann vorgesehen sein, dass die Trennstellen beim Aufdrucken, bevorzugt in Digitaldruck, der Elektronikeinheit durch eine Aussparung, insbesondere im Druckbild bereitgestellt werden. Somit können die Trennstellen insbesondere auch bereits bei Herstellung der Elektronikeinheit bereitgestellt werden, was eine hohe Anpassbarkeit der gesamten Elektronikeinheit an unterschiedliche Anwendungsbereiche und eine hohe Individualisierung und Flexibilisierung der Elektronikeinheit und der jeweiligen Sensorgruppen und Leitungseinheiten ermöglicht.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigt:
- Fig. 1: eine schematische Darstellung einer erfindungsgemäßen Baubahn,
- Fig. 2: eine schematische Detailansicht aus Fig. 1,
- Fig. 3A: eine schematische Darstellung einer weiteren Ausführungsform einer erfindungsgemäßen Baubahn mit hervorgehobener erster Sensorgruppe,
- Fig. 3B: eine schematische Darstellung der in Fig. 3A gezeigten Baubahn mit hervorgehobener zweiter Sensorgruppe,
- Fig. 3C: eine schematische Darstellung der in Fig. 3A gezeigten Baubahn mit hervorgehobener dritter Sensorgruppe,
- Fig. 3D: eine schematische Darstellung der in Fig. 3A gezeigten Baubahn mit hervorgehobener vierter Sensorgruppe,
- Fig. 3E: eine schematische Darstellung der in Fig. 3A gezeigten Baubahn mit hervorgehobener fünfter Sensorgruppe,
- Fig. 4A: eine schematische Darstellung einer weiteren Ausführungsform einer erfindungsgemäßen Baubahn mit hervorgehobener erster Sensorgruppe,
- Fig. 4B: eine schematische Darstellung der in Fig. 4A gezeigten Baubahn mit hervorgehobener zweiter Sensorgruppe,
- Fig. 4C: eine schematische Darstellung der in Fig. 4A gezeigten Baubahn mit hervorgehobener dritter Sensorgruppe,
- Fig. 4D: eine schematische Darstellung der in Fig. 4A gezeigten Baubahn mit hervorgehobener vierter Sensorgruppe,
- Fig. 4E: eine schematische Darstellung der in Fig. 4A gezeigten Baubahn mit hervorgehobener fünfter Sensorgruppe,
- Fig. 5: eine schematische Darstellung einer weiteren Ausführungsform einer erfindungsgemäßen Baubahn,
- Fig. 6: eine schematische Querschnittsdarstellung einer erfindungsgemäßen Baubahn,
- Fig. 7: eine schematische Querschnittsdarstellung einer weiter Ausführungsform erfindungsgemäßen Baubahn,
- Fig. 8: eine schematische Seitenansicht einer weiteren Ausführungsform der erfindungsgemäßen Baubahn,
- Fig. 9: eine schematische perspektivische Darstellung einer weiteren Ausführungsform einer erfindungsgemäßen Baubahn,
- Fig. 10: eine schematische Darstellung einer Anschlusseinrichtung,

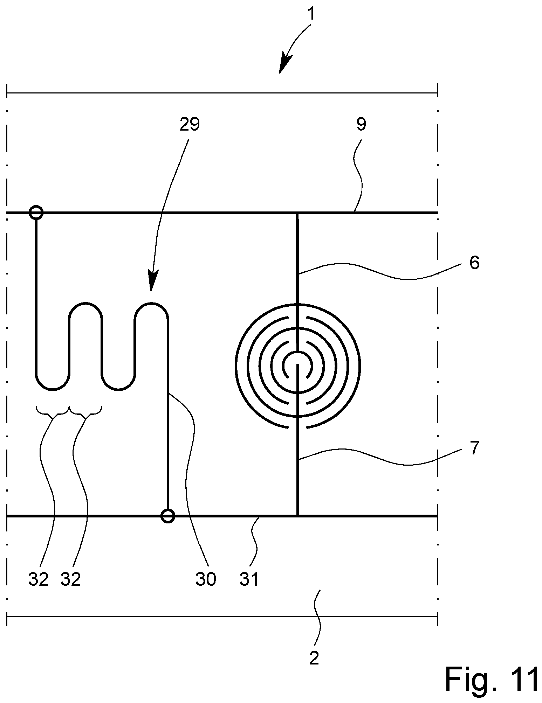

- Fig. 11: eine schematische Darstellung einer Teststruktur,

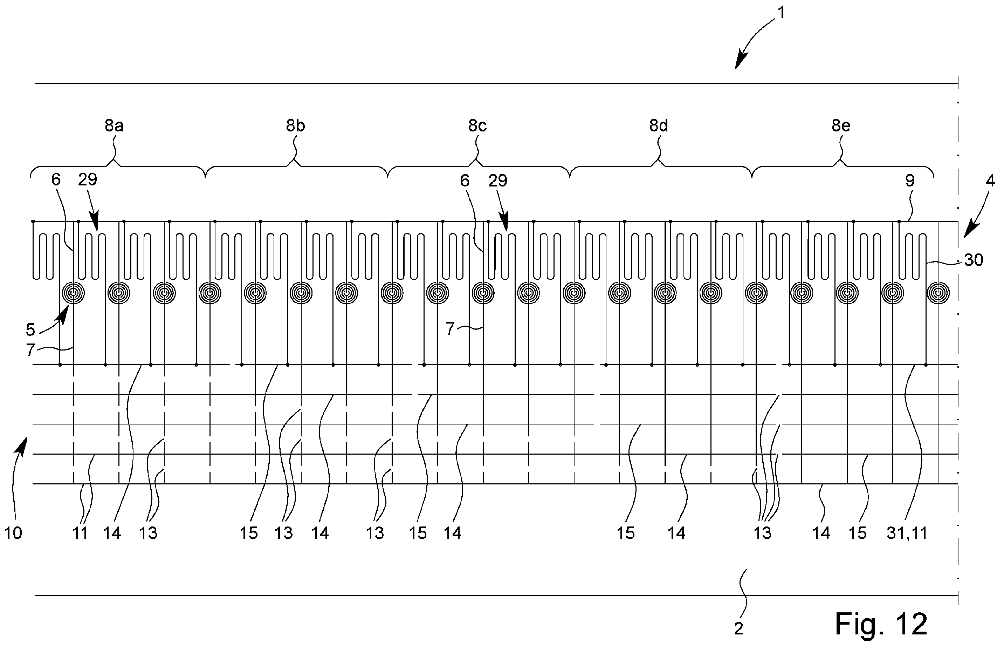

- Fig. 12: eine schematische Darstellung einer weiteren Ausführungsform einer erfindungsgemäßen Baubahn,

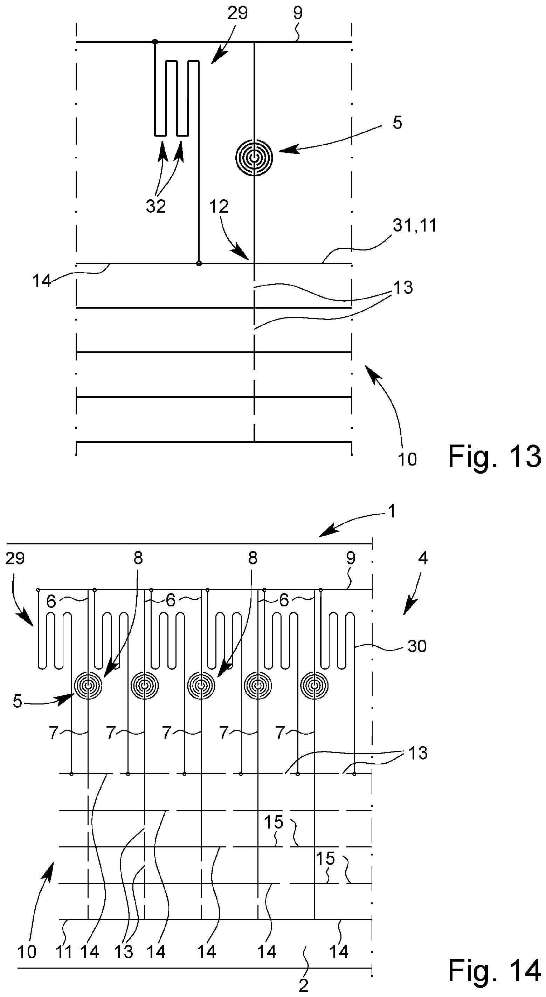

- Fig. 13: eine schematische Darstellung eines Ausschnitts einer weiteren Ausführungsform einer erfindungsgemäßen Baubahn und
- Fig. 14: eine schematische Darstellung einer weiteren Ausführungsform einer erfindungsgemäßen Baubahn.

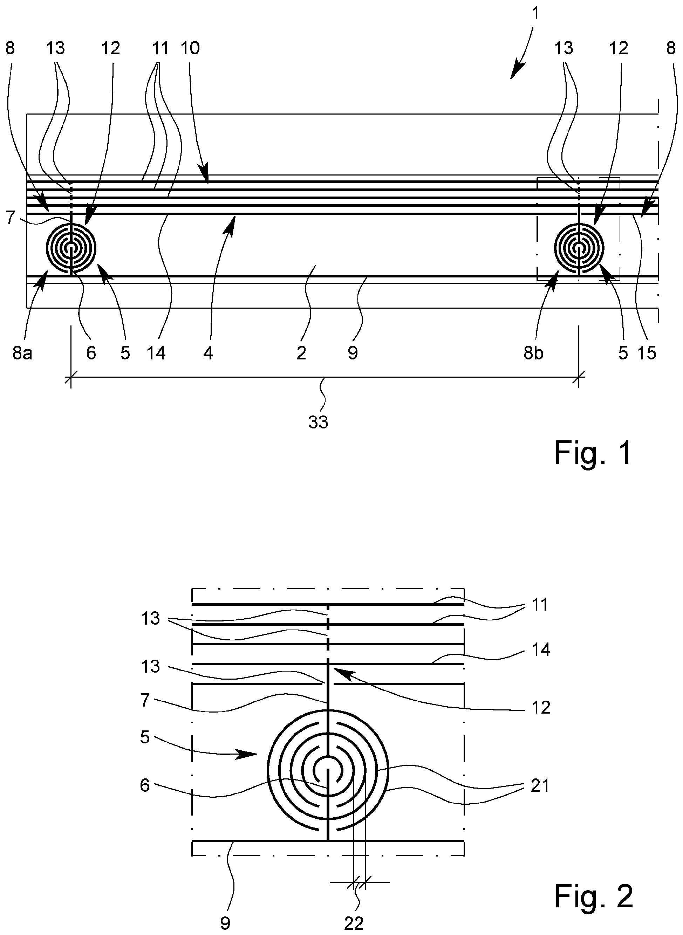

Fig. 1 zeigt eine Baubahn 1. Die Baubahn 1 kann insbesondere im Flachdachbereich und/oder innerhalb einer Unterbedachung verwendet werden. Ferner zeigt Fig. 1, dass die Baubahn 1 eine Trägerschicht 2 aufweist, die in einem Schichtaufbau 24 integriert ist. Der Schichtaufbau 24 kann einschichtig oder mehrschichtig ausgebildet sein. Bei dem in Fig. 1 dargestellten Ausführungsbeispiel ist ein wenigstens zweischichtiger Schichtaufbau 24 vorgesehen.

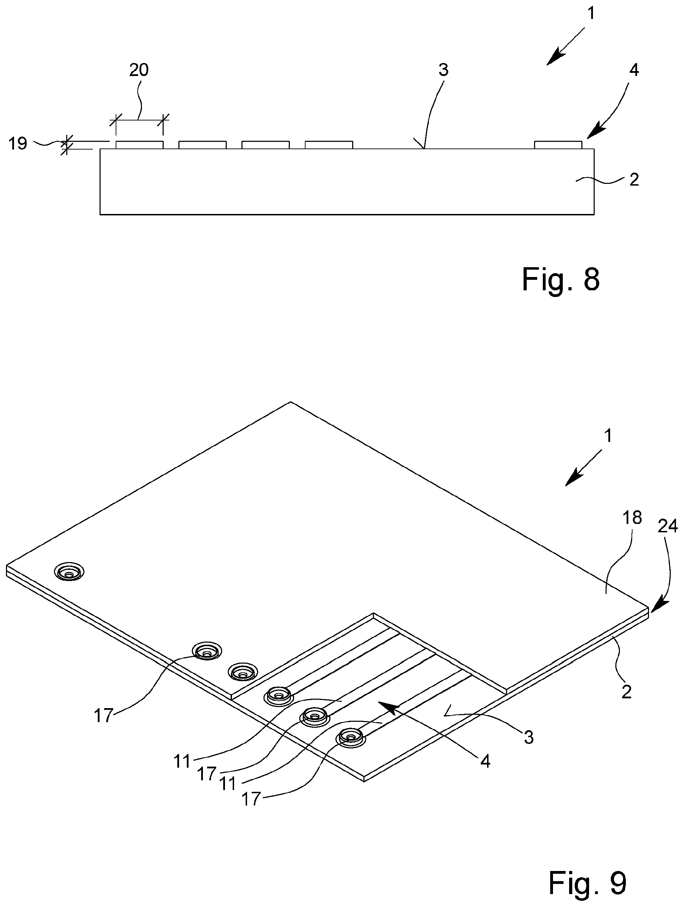

Fig. 8 zeigt eine einschichtige Baubahn 1. Die Trägerschicht 2 weist eine Elektronikeinheit 4 auf.

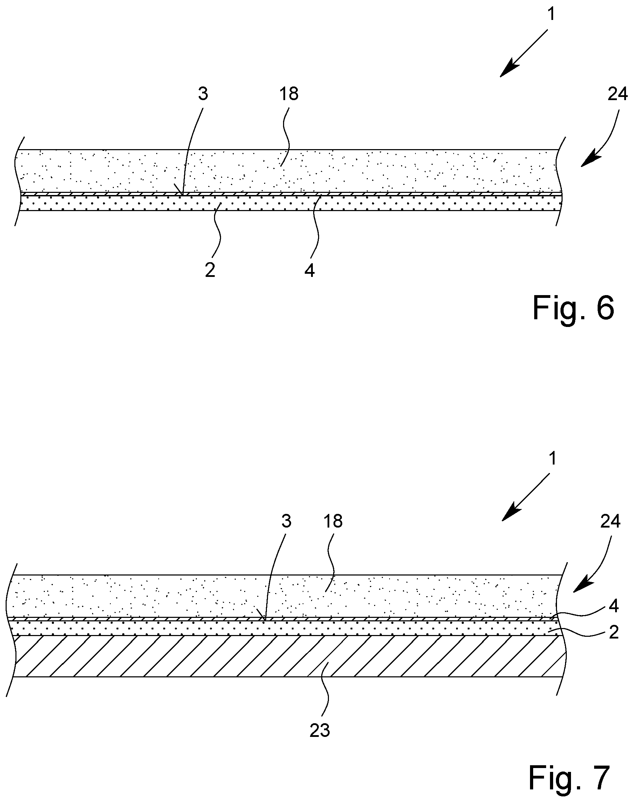

Fig. 6 zeigt eine Baubahn 1 mit einem mehrlagigen Schichtaufbau 24. Der Schichtaufbau 24 weist eine Trägerschicht 2 und eine Textilschicht 18 auf. Auf die Außenseite 3 der Trägerschicht 2 ist eine Elektronikeinheit 4 aufgebracht, insbesondere aufgedruckt.

In weiteren Ausführungsformen kann die Baubahn 1 auch ohne eine Textilschicht 18 bereitgestellt werden.

Fig. 1 zeigt, dass die aufgedruckte Elektronikeinheit 4 einen Feuchtesensor 5 aufweist.

Fig. 2 zeigt ein Detail der Fig. 1. Der in Fig. 2 dargestellte Feuchtesensor 5 ist als resistiver Feuchtesensor 5 ausgebildet. Zur resistiven Feuchtemessung weist der Feuchtesensor 5 wenigstens zwei benachbarte elektrisch leitfähige Messleiterbahnen 6, 7 auf. Die Messleiterbahnen 6, 7 bilden im dargestellten Ausführungsbeispiel ein gerundetes, insbesondere zumindest im Wesentlichen kreisförmiges, Sensorfeld aus. Das dargestellte Sensorfeld ist zumindest im Wesentlichen labyrinthartig aufgebaut.

Nicht näher dargestellt ist, dass der Feuchtesensor 5 mit den zwei Messleiterbahnen 6, 7 auch als kapazitiver Feuchtesensor 5 ausgebildet sein kann. Auch zur kapazitiven Feuchtemessung können die elektrisch leitfähigen Messleiterbahnen 6, 7 genutzt werden. Bei einer Ausbildung des Feuchtesensors 5 als kapazitiver Feuchtesensor 5 kann ein wie in Fig. 2 dargestelltes Design des Feuchtesensors 5 genutzt werden. Auch ein kapazitiver Feuchtesensor 5 kann auf die Außenseite 3 der Trägerschicht 2 aufgebracht, insbesondere aufgedruckt, sein.

Fig. 2 zeigt weiter, dass die zwei Messleiterbahnen 6, 7 des Feuchtesensors 5 miteinander kämmen. Zudem bilden die dargestellten Messleiterbahnen 6, 7 eine Mehrzahl von abstehenden Fingern 21 aus. Die Finger 21 greifen im Ausführungsbeispiel der Fig. 2 ineinander und kämmen miteinander. Die Finger 21 sind darüber hinaus zumindest im Wesentlichen bogenabschnittsförmig, insbesondere kreisbogenabschnittsförmig, ausgebildet. Zwischen zwei unmittelbar benachbarten Fingern 21 wird eine Wasserleitung ausgebildet, also ein Bereich, der bei Undichtigkeit Wasser oder Feuchtigkeit führen kann.

Zudem zeigt Fig. 2, dass die gebildeten Wasserleitungen eine zumindest im Wesentlichen gerundete Form aufweisen und insbesondere zumindest im Wesentlichen kreisringabschnittsförmig ausgebildet sind. Eine Wasserleitung kann dabei insbesondere die Form eines halben Kreisringes oder auch nur Bereiche davon ausbilden.

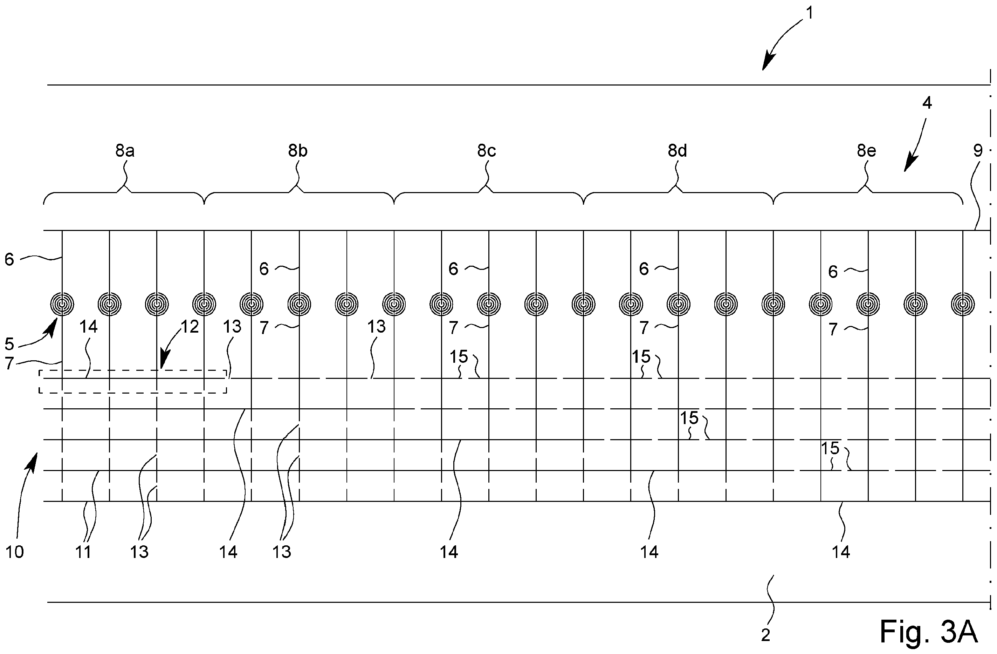

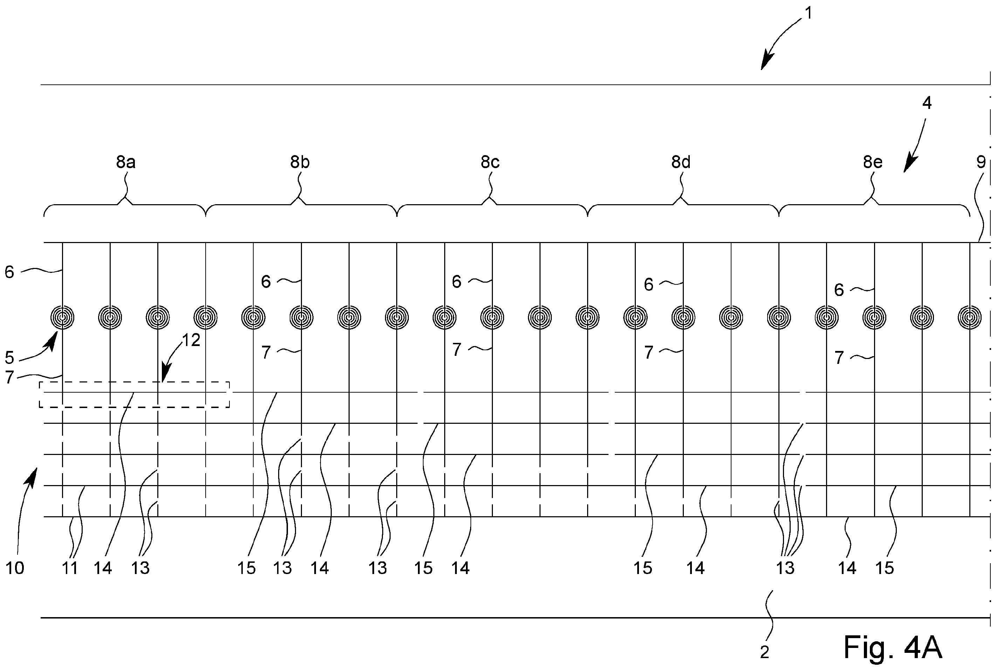

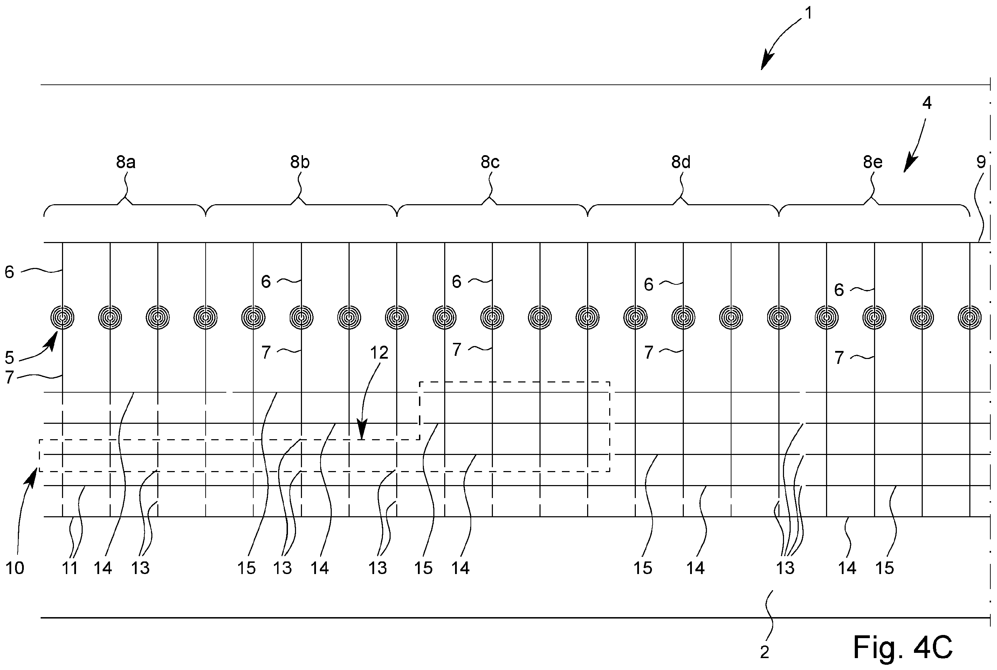

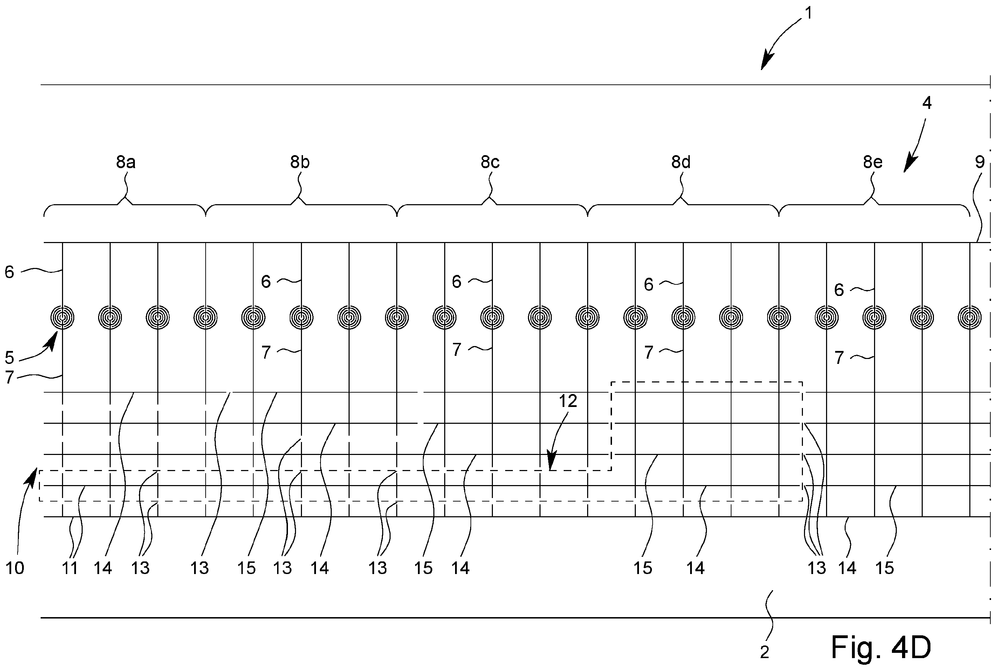

Die Fig. 3A bis 3E sowie die Fig. 4A bis 4E zeigen eine Mehrzahl von Sensorgruppen 8a-8e. Die Sensorgruppen 8a-8e können durch wenigstens einen Feuchtesensor 5, in den dargestellten Ausführungsbeispielen durch mehrere Feuchtesensoren 5, gebildet sein.

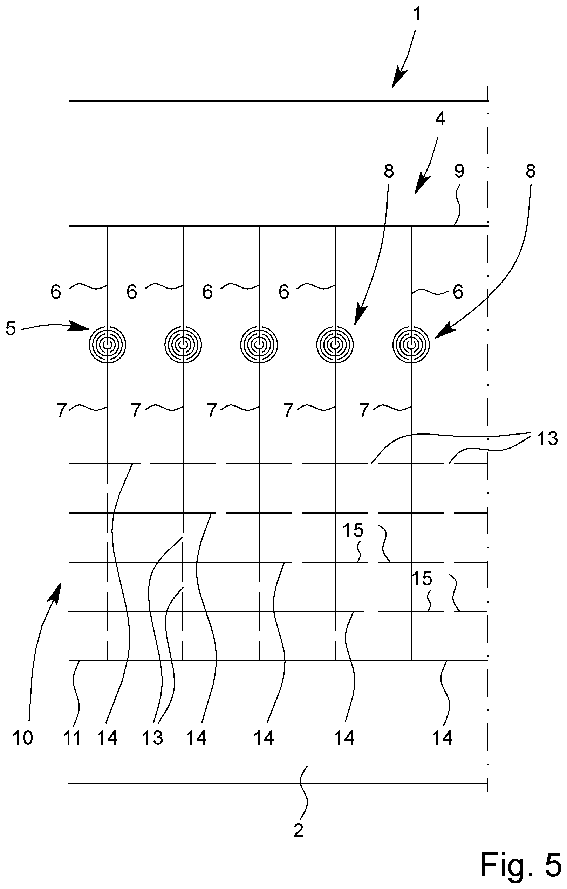

Die Fig. 1 zeigt, dass Sensorgruppen 8a-8e vorgesehen sind, die jeweils nur einen Feuchtesensor 5 umfassen. Dies ist beispielsweise auch in der Fig. 5 gezeigt, wo jede Sensorgruppe 8 nur einen Feuchtesensor 5 umfasst.

Nicht näher dargestellt ist, dass unterschiedliche Sensorgruppen 8 auch eine unterschiedliche Anzahl von Feuchtesensoren 5 umfassen können. Die Fig. 3A zeigt, dass die erste Messleiterbahn 6 des Feuchtesensors 5 mit wenigstens einer Zuleitung 9 elektrisch verbunden ist. In dem in Fig. 3A dargestellten Ausführungsbeispiel sind alle ersten Messleiterbahnen 6 aller Feuchtesensoren 5 bzw. alle ersten Messleiterbahnen 6 der Sensorgruppen 8a bis 8e mit einer Zuleitung 9 elektrisch verbunden sind.

Außerdem zeigt die Ausführungsform nach der Fig. 3A, aber auch die Ausführungsform nach der Fig. 4A, dass die zweite Messleiterbahn 7 des Feuchtesensors 5 mit einer einer Mehrzahl von Leiterbahn 11 aufweisenden Leitungseinrichtung 10 elektrisch verbunden ist. Die Leitungseinrichtung 10 ist in den Ausführungsbeispielen, wie auch aus Fig. 5 ersichtlich wird, durch eine Mehrzahl von Leiterbahnen 11 gebildet.

In den dargestellten Ausführungsbeispielen verlaufen die Leiterbahnen 11 insbesondere parallel zueinander und weiter bevorzugt in Längsrichtung der Baubahn 1. Zumindest ein Bereich der zweiten Messleiterbahn 7 kann insbesondere orthogonal zu den Leiterbahnen 11 angeordnet sein, wie dies auch aus der Fig. 5 ersichtlich wird.

Die Fig. 3A und die Fig. 4A zeigen bei unterschiedlichen Ausführungsformen, dass jeder Sensorgruppe 8a-8e eine mit der zweiten Messleiterbahn 7 des jeweiligen Feuchtesensors 5 der jeweiligen Sensorgruppe 8a-8e elektrisch verbundene Leitungseinheit 12 der Leitungseinrichtung 10 zugeordnet ist, wobei die einzelnen Leitungseinheiten 12 elektrisch voneinander über wenigstens eine Trennstelle 13 und/oder Trennstellen 13 getrennt sind.

In den dargestellten Ausführungsbeispielen ist eine Mehrzahl von Trennstellen 13 vorgesehen. Die Fig. 5 zeigt die Trennstellen 13 für Sensorgruppen 8, die nur einen Feuchtesensor 5 umfassen, was ebenfalls auch in Fig. 1 für zwei Feuchtesensoren 5 und somit für zwei Sensorgruppen 8 dargestellt ist.

Ferner sind in den dargestellten und bevorzugten Ausführungsbeispielen die Trennstellen 13 sowohl in den jeweiligen Leiterbahnen 11 als auch in den jeweiligen zweiten Messleiterbahnen 7 eingebracht.

In Fig. 1 ist dargestellt, dass die Trennstelle 13 als Unterbrechung der Leiterbahn 11 und der zweiten Messleiterbahn 7 ausgebildet ist. Eine Trennstelle 13 kann insbesondere entweder als Unterbrechung der Leiterbahn 11 oder als Unterbrechung der zweiten Messleiterbahn 7 ausgebildet sein, so dass insbesondere letztlich zwei unterschiedliche Arten von Trennstellen 13 realisiert sein können. Die Trennstellen 13 in ein und derselben zweiten Messleiterbahn 7 können unterschiedliche Abschnitte der zweiten Messleiterbahn 7 voneinander elektrisch trennen und insbesondere eine Kontaktierung zu dem Feuchtesensor 5 unterbrechen.

Die Fig. 3A zeigt, dass die Feuchtesensoren 5 einer Sensorgruppe 8a bis 8e parallel geschaltet sind, insbesondere sofern mehrere Feuchtesensoren 5 in einer Sensorgruppe 8a-8e eingesetzt werden.

In den Ausführungsformen nach den Fig. 3A und 4A, aber auch in der Ausführungsform nach der Fig. 5 ist dargestellt, dass wenigstens eine Leiterbahn 10 einen mit einer nicht näher dargestellten elektrischen Verbindungseinrichtung der Baubahn 1 verbindbaren Hauptleiterbahnabschnitt 14 und wenigstens einen von dem Hauptleiterbahnabschnitt 14 dieser Leiterbahn 11 über eine Trennstelle 13 getrennten Nebenleiterbahnabschnitt 15 aufweist. Insbesondere weist die wenigstens eine Leiterbahn 11 eine Mehrzahl von Nebenleiterabschnitten 15 auf, wobei die Nebenleiterbahnabschnitte 15 der jeweiligen Leiterbahn 11 voneinander jeweils durch wenigstens eine, bevorzugt in der Leiterbahn 11 vorgesehene, Trennstelle 13 getrennt sind.

In den Fig. 3A bis 3E sind letztlich durch entsprechende gestrichelte Hervorhebungen unterschiedliche Leitungseinheiten 12 dargestellt. Die Fig. 3A zeigt zum Beispiel, dass die Leitungseinheit 12 für die Sensorgruppe 8a nur einen Hauptleiterbahnabschnitt 14 einer Leiterbahn 11 umfasst. Dieser Hauptleiterbahnabschnitt 14 ist über Trennstellen 13 in den zweiten Messleiterbahnen 7 der Feuchtesensoren 5 dieser Sensorgruppe 8a zu anderen Leiterbahnen 11 unterbrochen. Somit umfasst die Leitungseinrichtung 10 für die Sensorgruppe 8a keinen Nebenleiterbahnabschnitt 15.

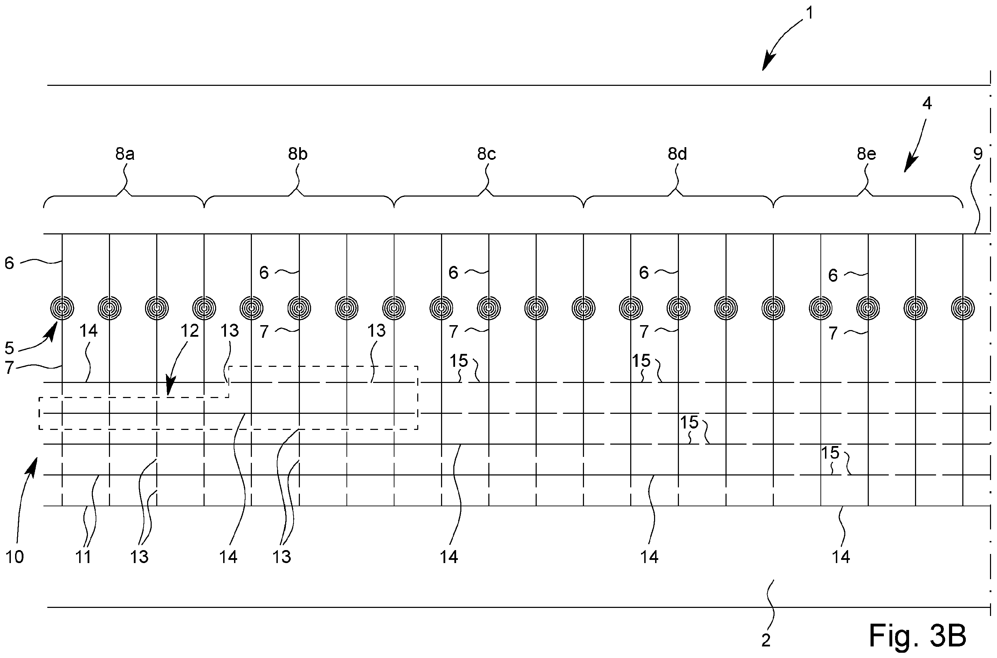

In Fig. 3B ist dargestellt, dass der Hauptleiterbahnabschnitt 14 letztlich durch eine andere Leiterbahn 11 gebildet wird, wobei gleichzeitig auch die Sensorgruppe 8e eine Mehrzahl von Nebenleiterabschnitten 15 der ersten Leiterbahn 11 für die Sensorgruppe 8a aufweist.

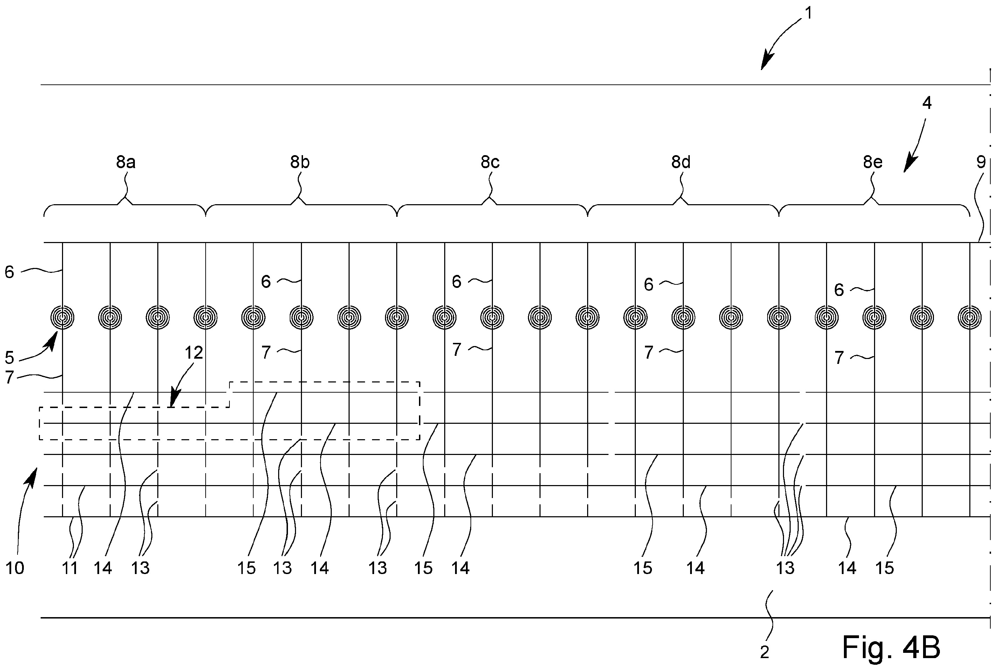

In Fig. 4B ist wiederum die Alternative dargestellt, dass die erste Leiterbahn 11 nur einen Nebenleiterbahnabschnitt 15 für die Sensorgruppe 8b aufweist. Zu den anderen Leiterbahnen 11 ist die Leitungseinheit 12 durch Trennstellen 13 sowohl in der Leiterbahn 11 als auch in den zweiten Messleiterbahnen 7 der Sensorgruppe 8b getrennt.

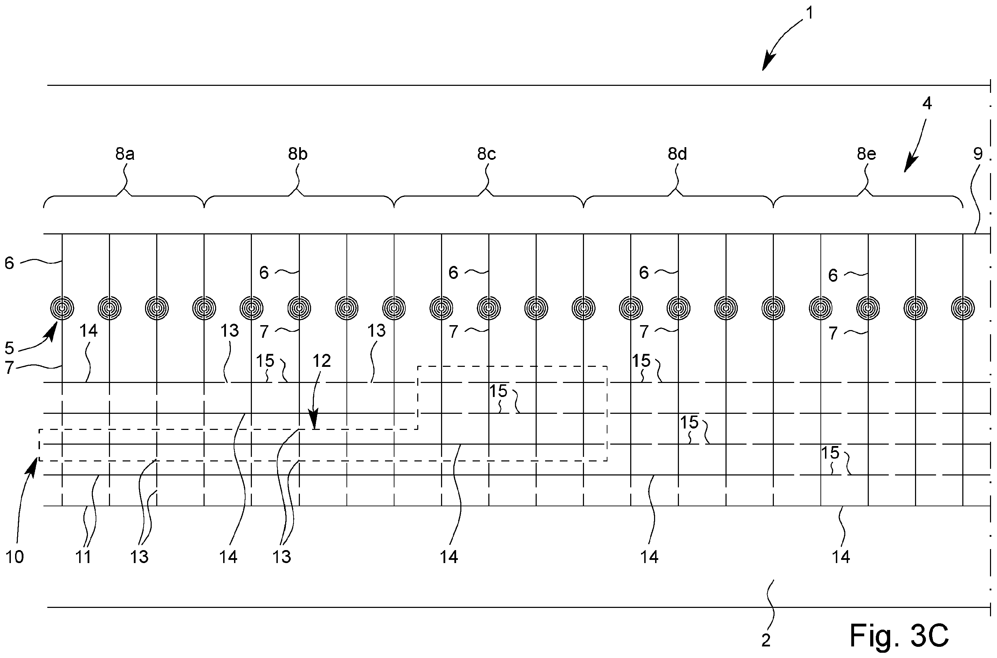

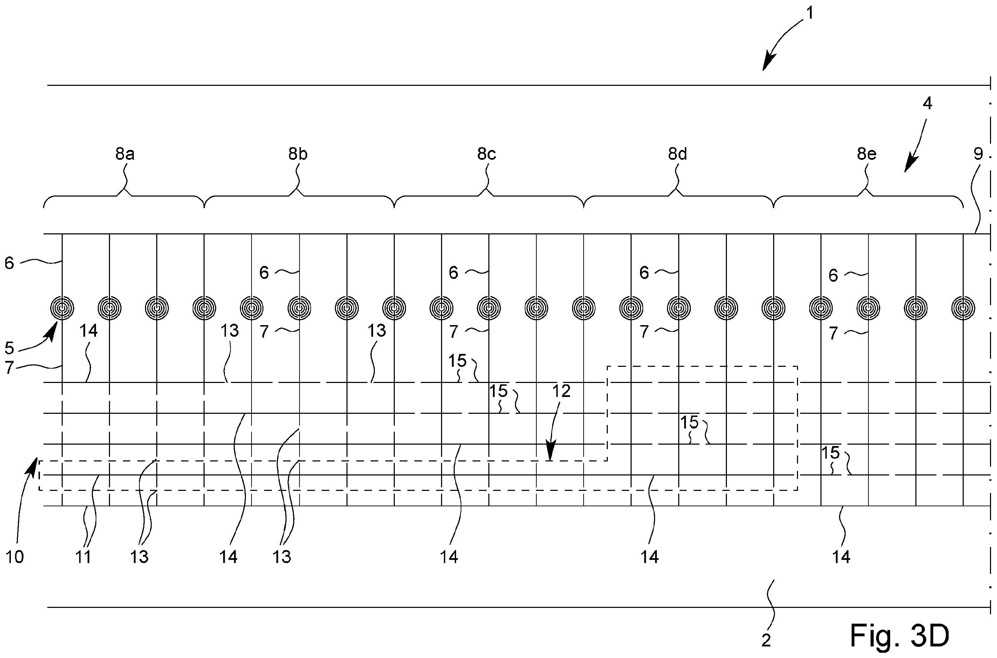

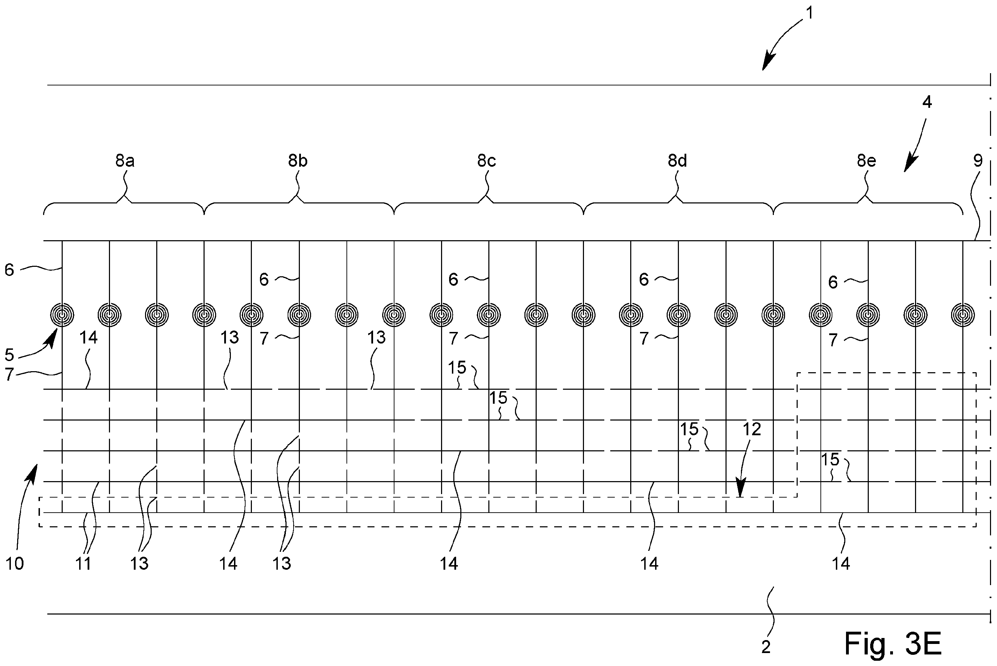

In Fig. 3C wiederum ist die Leitungseinheit 12 für die Sensorgruppe 8c, in Fig. 3D für die Sensorgruppe 8d sowie in Fig. 3E für die Sensorgruppe 8e dargestellt. Die entsprechenden Hervorhebungen der Leitungseinheiten 12 verdeutlichen, dass für unterschiedliche Sensorgruppen 8a-8e letztlich auch unterschiedliche ausgebildete Leitungseinheiten 12 vorgesehen sind, die voneinander über Trennstellen 13 getrennt sind. Diese unterschiedlichen Leitungseinheiten 12 ermöglichen es insbesondere bei einem wiederkehrenden Muster des gesamten unteren Kontaktierungsbereiches der Elektronikeinheit 4 (der durch den orthogonalen Abschnitt der zweiten Messleiterbahnen 7 und den parallelen Leiterbahnen 11 gebildet wird), eine entsprechende Kontaktierung für die unterschiedlichen Sensorgruppen 8a-8e bereitzustellen.

Die Ausführungsform nach der Fig. 4A bis 4D unterscheidet sich von der in Fig. 3A bis 3D dargestellten Ausführungsform durch eine unterschiedliche Ausbildung der Nebenleiterbahnabschnitte 15 im Bereich einer Sensorgruppe 8a-8e.

Folglich kann also eine Leiterbahn 11 eine Mehrzahl von Nebenleiterbahnabschnitten 15 aufweisen, wobei die Nebenleiterbahnabschnitte 15, wie in Fig. 4A gezeigt, der jeweiligen Leiterbahn 11 voneinander jeweils durch wenigstens eine in der Leiterbahn 11 vorgesehene Trennstelle 13 getrennt sind.

Die in den Fig. 3A bis 3E sowie in den Fig. 4A bis 4E dargestellten Leitungseinheiten 12 sind gemäß den vorgenannten Ausführungen durch einen Hauptleiterbahnabschnitt 14 der Leiterbahn 11 und wenigstens einen Nebenleiterbahnabschnitt 15 wenigstens einer anderen Leiterbahn 11 gebildet.

Wenigstens eine Messleiterbahn 7 eines Feuchtesensors 5 einer jeweiligen Sensorgruppe 8a-8e kann elektrisch mit dem Hauptleiterbahnabschnitt 14 der zugeordneten Leitungseinheit 12 verbunden sein, was für die unterschiedlichen Sensorgruppen 8a-8e jeweils in den Ausführungsformen nach den Fig. 3A bis 3E sowie in den Ausführungsformen nach den Fig. 4A bis 4E dargestellt ist. Die zweiten Messleiterbahnen 7 kreuzen insbesondere wenigstens einen Nebenleiterbahnabschnitt 15 der zugeordneten Leitungseinheit 12 und sind elektrisch mit diesem verbunden, wobei die zweite Messleiterbahn 7 von wenigstens einem Hauptleiterbahnabschnitt 14 einer anderen Leitungseinheit 12 durch wenigstens eine Trennstelle 13 in der zweiten Messleiterbahn 7 elektrisch getrennt ist.

Wie zuvor erläutert, zeigen die Fig. 3A bis 3E und Fig. 4A bis 4E unterschiedliche Ausführungsformen. Gemäß den Fig. 3A bis 3E ist vorgesehen, dass ein Nebenleiterbahnabschnitt 15 einer Leitungseinheit 12 wenigstens (in den dargestellten Ausführungsformen nur) eine zweite Messleiterbahn 7 der der Leitungseinheit 12 zugeordneten Sensorgruppe 8a-8e kreuzt und elektrisch mit dieser verbunden ist.

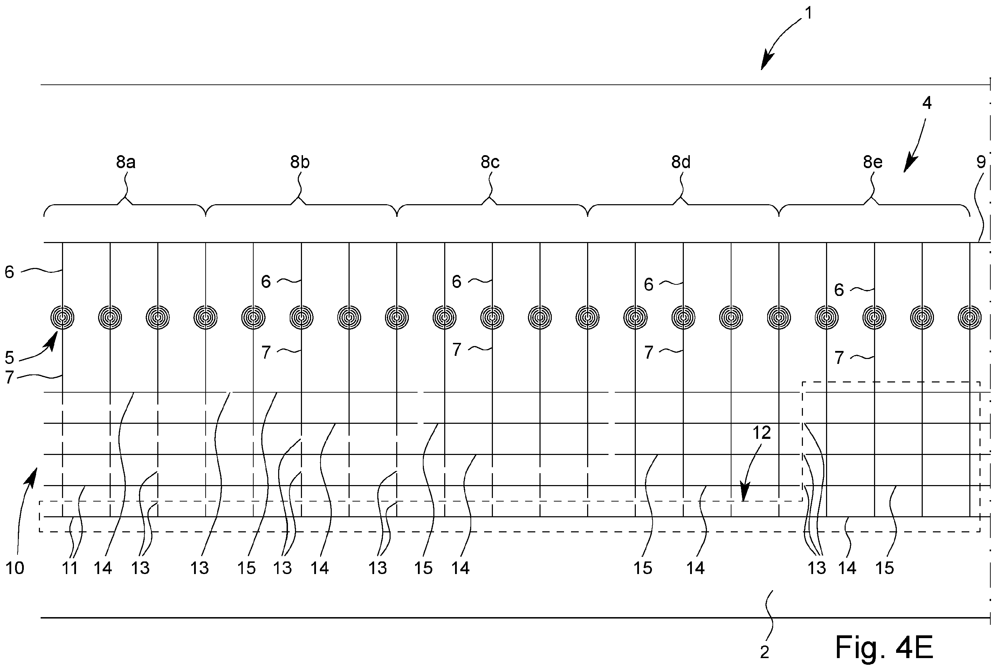

In den Fig. 4A und 4E wird die bevorzugte Ausführungsform dargestellt, dass ein Nebenleiterbahnabschnitt 15 einer Leitungseinheit 12 alle zweiten Messleiterbahnen 7 der der Leitungseinheit 12 zugeordneten Sensorgruppe 8a-8e kreuzt und elektrisch mit diesen verbunden ist. Grundsätzlich kann auch eine Kombination der vorgenannten Ausführungen erfolgen, sofern dies anwendungsseitig bevorzugt ist.

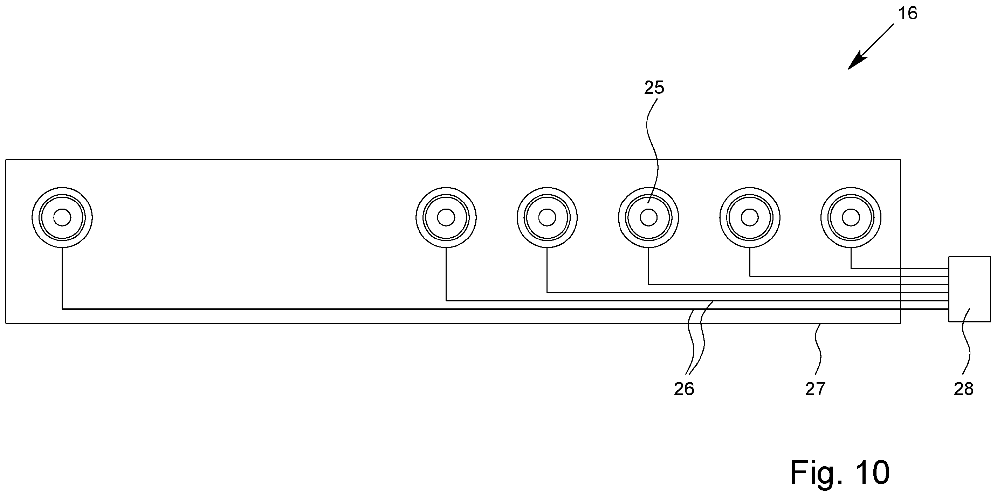

**In** der Fig. 9 ist dargestellt, dass ein erstes Verbindungsmittel 17 der Verbindungseinrichtung der Baubahn 1 vorgesehen ist. Dieses erste Verbindungsmittel 17 verbindet nämlich die Hauptleiterbahnabschnitte 14 und/oder die Zuleitung 9 zu einer externen Anschlusseinrichtung 16, insbesondere elektrisch. Die externe Anschlusseinrichtung 16 ist mit einer schematischen Ausführungsform in der Fig. 10 dargestellt. Die elektrische Verbindung zwischen der Anschlusseinrichtung 16, die wiederum über ein Energieversorgungsmittel 28 zu einer Stromversorgung verbunden werden kann, gewährleistet insbesondere die sichere elektrische Kontaktierung der Feuchtesensoren 5.

**In** Fig. 10 ist schematisch eine externe Anschlusseinrichtung 16 dargestellt, die mit den ersten Verbindungsmitteln 17 der in Fig. 1 dargestellten Baubahn 1 verbunden werden kann.

Ferner zeigen die Fig. 9 und 10 ebenfalls eine komplementäre Ausbildung des ersten Verbindungsmittels 17 zu den zweiten Verbindungsmittel 25 der externen Anschlusseinrichtung 9. So kann das erste Verbindungsmittel 17 komplementär zu einem zweiten Verbindungsmittel 25 der externen Anschlusseinrichtung 16 ausgebildet sein, wobei das erste Verbindungsmittel 17 den elektrischen Kontakt zwischen dem zweiten Verbindungsmittel 25 der externen Anschlusseinrichtung 16 und der Elektronikeinheit 4 der Baubahn 1 bereitstellen kann.

Bei dem in den Fig. 9 und 10 dargestellten Ausführungsbeispiel ist vorgesehen, dass das erste Verbindungsmittel 7 als Verbindungsmittel eines komplementären, vorzugsweise zerstörungsfrei und/oder werkzeuglos lösbaren, Verbindungssystems ausgebildet ist. **In** dem dargestellten Ausführungsbeispiel ist als Verbindungssystem eine Druckknopfverbindung vorgesehen. Die Druckknopfverbindung weist insbesondere eine geringe Aufbauhöhe auf. So kann die Aufbauhöhe des ersten Verbindungsmittels 17, das mit dem zweiten Verbindungsmittel 25 verbunden ist, insbesondere eine Höhe von 1 cm nicht überschreiten.

Letztlich kann das erste Verbindungsmittel 17 mit dem zweiten Verbindungsmittel 25 formschlüssig und/oder verrastbar verbindbar.

Bevorzugt kann jeder Leiterbahn 11 und/oder jedem Hauptleiterbahnabschnitt 15 ein eigenes Verbindungsmittel 17 zur Strom- bzw. Energieversorgung zugeordnet sein, das wiederrum mit einem zweiten Verbindungsmittel 25 einer externen Anschlusseinrichtung verbunden werden kann.

**In** Fig. 10 ist dargestellt, dass das zweite Verbindungsmittel 25 der Anschlusseinrichtung 16 in einem Gehäuse 27 angeordnet ist. Das Gehäuse 27 kann als Widerlager dienen, das bei der Herstellung der Verbindung zwischen dem ersten und dem zweiten Verbindungsmittel 17, 25 benötigt wird. Über das Gehäuse 27 kann der zum Zusammenbringen bzw. Verrasten der Verbindungsmittel 17, 25 benötigte Gegendruck bereitgestellt werden.

Die externe Anschlusseinrichtung 16 kann ferner Leitungskabel 26 (die als Leiterbahnen ausgebildet sein können) aufweisen, die jeweils mit dem zweiten Verbindungsmitteln 25 elektrisch kontaktierend verbunden sind. Die Leitungskabel können, wie aus Fig. 10 ersichtlich wird, mit einem Energieversorgungsmittel 28 verbunden sein. Das Energieversorgungsmittel 28 kann bevorzugt an das Stromnetz, eine Batterie und/oder an eine andere externe Stromversorgung anschließbar sein.

Nicht näher dargestellt ist, dass die Zuleitung 9, die Leitungseinrichtung 10 und/oder die die Leiterbahnen 11 der Leitungseinrichtung 10 auf die Außenseite 3 der Trägerschicht 2 aufgebracht, insbesondere aufgedruckt, sind. Die Trennstellen 13 können nach Aufbringen, insbesondere Aufdrucken, der Elektronikeinheit 4 herstellbar sein.

**In** der Fig. 3A ist dargestellt, dass wenigstens eine Sensorgruppe 8a-8e, in der dargestellten Ausführungsform alle Sensorgruppen 8a-8e, eine Mehrzahl von Feuchtesensoren 5 aufweist. Insbesondere können zwischen 2 bis 20 Feuchtesensoren 5 je Sensorgruppe 8a-8e eingesetzt werden. Es kann auch vorgesehen sein, dass sich mehreren Sensorgruppen 8a-8e einer Baubahn 1 voneinander durch eine unterschiedliche Anzahl von Feuchtesensoren 5 unterschieden.

Unter anderem in Fig. 3A ist schematisch dargestellt, dass über die Länge der Baubahn 1 eine Mehrzahl von Feuchtesensoren 5 vorgesehen ist. **In** weiteren Ausführungsformen kann vorgesehen sein, dass die Feuchtesensoren 5 zueinander gleich beabstandet sind.

Der Abstand zwischen zwei unmittelbar benachbarten Feuchtesensoren 5 kann zwischen 10 cm bis 5 m liegen. Bei dem in Fig. 1 dargestellten Ausführungsbeispiel ist vorgesehen, dass der Abstand zumindest im Wesentlichen 40 cm +/- 10 cm beträgt.

Die in Fig. 6 dargestellte Trägerschicht 2 ist wasserdicht ausgebildet. Die Trägerschicht 2 kann insbesondere als wasserdichte Folienschicht ausgebildet sein. Die Trägerschicht 2 kann ferner als Material einen Kunststoff, wie Polypropylen, Polyethylen und/oder Polyethylenterephthalat (PET), aufweisen und/oder daraus bestehen.

Nicht dargestellt ist, dass die Trägerschicht 2 in weiteren Ausführungsformen wasserdicht und/oder diffusionsoffen, insbesondere wasserdampfdurchlässig, und/oder atmungsaktiv ausgebildet ist.

**In** dem in Fig. 6 dargestellten Ausführungsbeispiel ist vorgesehen, dass die Trägerschicht 2 diffusionsdicht ausgebildet ist. **In** weiteren Ausführungsformen kann vorgesehen sein, dass die Trägerschicht 2 diffusionshemmend und/oder wasserdampfundurchlässig ausgebildet ist.

Das in Fig. 2 gebildete Sensorfeld des Feuchtesensors 5 kann einen Durchmesser bzw. eine maximale Erstreckung zwischen 3 bis 8 cm aufweisen.

Die Breite der Wasserleitung bzw. der Abstand 22 zwischen zwei unmittelbar benachbarten Fingern 21 kann zwischen 1 mm bis 20 mm betragen.

**In** den Fig. 6 und 7 ist dargestellt, dass ein mehrlagiger Schichtaufbau 24 vorgesehen ist, da neben der Trägerschicht 2 auch eine wasserdurchlässige, vorzugsweise wasseraufnehmende, Textilschicht 18 vorgesehen sein kann.

Die in den Fig. 6 und 7 dargestellte Textilschicht 18 ist wasseraufnehmend und somit wasserdurchlässig ausgebildet. Die Elektronikeinheit 4 ist zwischen der Trägerschicht 2 und der hydrophilen Textilschicht 18 vorgesehen. Somit ist die Außenseite 3 der Textilschicht 18 zugewandt. Schematisch ist in Fig. 9 dargestellt, dass der Feuchtesensor 5 (abgedeckt durch die Textilschicht 18) im unmittelbaren Kontakt mit der Textilschicht 18 steht. **In** Fig. 9 ist der Feuchtesensor 5 in der Elektronikeinheit 4 integriert und nicht näher dargestellt, wobei der Feuchtesensor 5 sowie die Elektronikeinheit 4 an der Textilschicht 18 angeordnet sind.

Nicht dargestellt ist, dass die Textilschicht 18 als Vliesschicht ausgebildet ist und insbesondere hydrophile Fasern aufweist. Als hydrophile Fasern können insbesondere Fasern vorgesehen sein, die als Material Polyethylenterephthalat (PET) aufweisen. Alternativ oder zusätzlich kann vorgesehen sein, dass die Fasern der Textilschicht 18 eine hydrophile Beschichtung aufweisen.

Nicht näher dargestellt ist, dass die Textilschicht 18 im mittelbaren und/oder unmittelbaren Kontakt zu der Elektronikeinheit 4 und den Feuchtesensoren 5 ist. Der Kontakt ist insbesondere derart, dass die Feuchtesensoren 5 eine Feuchtigkeit, die in der Trägerschicht 2 in wenigstens einer Wasserleitung aufgenommen worden ist, detektieren kann. Ein mittelbarer Kontakt zwischen Textilschicht 18 und Elektronikeinheit 4 kann sich dann ergeben, wenn zur Verbindung der Textilschicht 4 mit der Trägerschicht 2 eine Klebeschicht zwischen der Elektronikeinheit 4 und der Textilschicht 18 zur stoffschlüssigen Verbindung vorgesehen ist. Über die Kleberschicht kann jedoch trotzdem eine Feuchtedetektion ermöglicht werden, so dass die Feuchtemessung letztlich insbesondere nicht beeinträchtigt wird. Die Fig. 7 zeigt, dass die Elektronikeinheit 4 zwischen der Trägerschicht 2 und der Textilschicht 18 vorgesehen ist.

Die Fig. 8 zeigt, dass die Leiterbahn 11 bzw. die Zuleitung 9 eine Materialdicke 19 von 1 bis 50 µm aufweisen können. Ferner kann die Leiterbahn 11 und die Zuleitung 9 eine Breite 20 von 0,1 bis 8 mm aufweisen.

Nicht näher dargestellt ist, dass auch die Messleiterbahnen 6, 7 eine Materialdicke 19 von 1 bis 50 µm und eine Breite von 0,3 bis 2 mm aufweisen können.

Nicht näher dargestellt ist, dass die Sensorgruppe 8a-8e sich über jeweils eine Länge der Baubahn 1 von wenigstens 0,2 m, insbesondere zwischen 0,5 bis 3 m erstreckt.

Fig. 7 zeigt, dass der Schichtaufbau 3 eine weitere Schicht 23 zur Ausbildung der Baubahn 1 als Dachbahn aufweist. In weiteren Ausführungsformen kann vorgesehen sein, dass die weitere Schicht 23 die Baubahn 1 als Dachfolie, Fassadendachbahn, Fassadenbahn und/oder Dampfbremse und/oder Unterdachbahn, insbesondere Unterdeck- und/oder Unterspannbahn, ausbildet.

Die weitere Schicht 23 kann als Funktionsschicht ausgebildet sein, die insbesondere dampfsperrend und/oder diffusionsdicht ausgebildet ist. Insbesondere kann die Dachbahn, wie sie in Fig. 7 dargestellt ist, als Flachdachbahn eingesetzt werden. Fig. 7 zeigt, dass die weitere Schicht 23 an der der Elektronikeinheit 4 abgewandten Außenseite der Trägerschicht 2 angeordnet ist. Nicht dargestellt ist, dass die weitere Schicht 23 diffusionsdicht, diffusionshemmend, wasserdampfundurchlässig und/oder wasserdicht ausgebildet sein kann.

Die Breite der Trägerschicht 2 kann zwischen 1 bis 100 cm betragen.

Des Weiteren betrifft die Erfindung ein Verfahren zur Herstellung einer Baubahn 1 nach einer der vorgenannten Ausführungsformen. Die Baubahn 1, die durch das nicht näher dargestellte Verfahren hergestellt werden kann, kann eine Trägerschicht 2 aufweisen. Auf der Außenseite 3 der Trägerschicht 2 kann eine Elektronikeinheit 4 aufweisend eine Mehrzahl von eine ersten und eine zweite Messleiterbahn 6, 7 zur resistiven und/oder kapazitiven Feuchtemessung aufweisende Feuchtesensoren 5 angeordnet, insbesondere aufgedruckt, werden. Eine Mehrzahl von jeweils durch wenigstens einen Feuchtesensor 5 gebildete Sensorgruppen 8a-8e können vorgesehen sein. Die erste Messleiterbahn 6 des Feuchtesensors 5 kann mit wenigstens einer Zuleitung 9 elektrisch verbunden werden, wobei die zweite Messleiterbahn 7 des Feuchtesensors 5 mit einer eine Mehrzahl von Leiterbahnen 11 aufweisenden Leitungseinrichtung 10 elektrisch verbunden wird. Die vorgenannten elektrischen Verbindungen können insbesondere auch bereits bei Herstellung, insbesondere beim Aufbringen, der Elektronikeinheit 4 ausgebildet bzw. angelegt werden.

Jeder Sensorgruppe 8a-8e ist eine mit der zweiten Messleiterbahn 7 des jeweiligen Feuchtesensors 5 der jeweiligen Sensorgruppe 8a-8e elektrisch verbundene Leitungseinheit 12 der Leitungseinrichtung 10 zugeordnet, wobei die einzelnen Leitungseinheiten 12 elektrisch voneinander über wenigstens eine Trennstelle 13 und/oder Trennstellen 13 insbesondere in den jeweiligen Leiterbahnen 11 und/oder in den jeweiligen zweiten Messleiterbahnen 7 getrennt werden.

Ebenfalls ist nicht näher dargestellt, dass die Trennstellen 13 nach Aufbringen, insbesondere Aufdrucken, der Elektronikeinheit 4 durch Entfernung durch elektrisch leitfähiges Material hergestellt werden. Das elektrisch leitfähige Material kann beispielsweise durch Laserschneiden zielgerichtet und effizient entfernt werden, wodurch die einzelnen voneinander unabhängigen Leitungseinheiten 12 gebildet werden können. Die Untergrundschicht, insbesondere die Trägerschicht 2, wird durch das Laserschneiden bevorzugt nicht penetriert.

Die Trennstellen 13 können alternativ bereits beim Aufdrucken, bevorzugt im Digitaldruck, der Elektronikeinheit 4 durch eine Aussparung insbesondere im Druckbild bereitgestellt werden.

Verfahrensgemäß kann vorgesehen sein, dass die Elektronikeinheit 4 im Rapportdruck - das heißt mit einem wiederkehrenden Design bzw. einem nahtlos ineinander übergehenden Muster - zumindest im Wesentlichen endlos und/oder im Inlineverfahren auf die Außenseite 3 der Trägerschicht 2 aufgebracht werden kann. Dieses endlose bzw. wiederkehrende Design kann zur Ausbildung der Sensorgruppen 8a-8e bzw. der voneinander zu trennenden Feuchtesensoren 5 durch das Einbringen von Trennstellen 13 in die erfindungsgemäße Baubahn 1 überführt werden. Ein solches Verfahren ist aus Herstellungsgründen besonders vorteilhaft, da insbesondere eine aufwendige individuelle Bereitstellung einzelner Druckbilder für die Baubahn 1 vermieden werden können und die Elektronikeinheit 4 letztlich endlos mit wiederkehrendem Design aufgebracht werden kann, das durch die Trennstellen 13 gezielt an die jeweilige Anwendungssituation angepasst werden kann.

### Bezugszeichenliste:

- 1: Baubahn
- 2: Trägerschicht
- 3: Außenseite von 2
- 4: Elektronikeinheit
- 5: Feuchtesensor
- 6: erste Messleiterbahn von 5
- 7: zweite Messleiterbahn von 5
- 8a: Sensorgruppe
- 8b: Sensorgruppe
- 8c: Sensorgruppe
- 8d: Sensorgruppe
- 8e: Sensorgruppe
- 9: Zuleitung
- 10: Leitungseinrichtung
- 11: Leiterbahnen von 10
- 12: Leitungseinheit
- 13: Trennstelle
- 14: Hauptleiterbahnabschnitt
- 15: Nebenleiterbahnabschnitt
- 16: externe Anschlusseinrichtung
- 17: Verbindungsmittel
- 18: Textilschicht
- 19: Materialdicke
- 20: Breite
- 21: Finger
- 22: minimaler Abstand
- 23: weitere Schicht
- 24: Schichtaufbau
- 25: zweites Verbindungsmittel
- 26: Leitungskabel
- 27: Gehäuse
- 28: Energieversorgungsmittel
- 29: Teststruktur
- 30: Trennleiterbahnabschnitt
- 31: Kontakt-Leiterbahn
- 32: Windungen
- 33: Abstand zu 5

## Patentansprüche

1. Baubahn (1), insbesondere zur Verwendung als Dachbahn, mit einer Trägerschicht (2), wobei auf der Außenseite (3) der Trägerschicht (2) eine Elektronikeinheit (4) aufweisend eine Mehrzahl von eine erste und eine zweite Messleiterbahn (6, 7) zur resistiven und/oder kapazitiven Feuchtemessung aufweisende Feuchtesensoren (5) angeordnet, bevorzugt aufgedruckt, ist,
wobei eine Mehrzahl von jeweils durch wenigstens einen Feuchtesensor (5) gebildete Sensorgruppen (8a-8e) vorgesehen ist,
wobei die erste Messleiterbahn (6) des Feuchtesensors (5) mit wenigstens einer Zuleitung (9) elektrisch verbunden ist,
wobei die zweite Messleiterbahn (7) des Feuchtesensors (5) mit einer eine Mehrzahl von Leiterbahnen (11) aufweisenden Leitungseinrichtung (10) elektrisch verbunden ist,
wobei jeder Sensorgruppe (8a-8e) eine mit der zweiten Messleiterbahn (7) des jeweiligen Feuchtesensors (5) der jeweiligen Sensorgruppe (8a-8e) elektrisch verbundene Leitungseinheit (12) der Leitungseinrichtung (10) zugeordnet ist, wobei die einzelnen Leitungseinheiten (12) elektrisch voneinander über wenigstens eine Trennstelle (13) und/oder Trennstellen (13), nämlich in den jeweiligen Leiterbahnen (11) und/oder in den jeweiligen zweiten Messleiterbahnen (7), getrennt sind und wobei die Trennstelle (13) als Unterbrechung der Leiterbahn (11) und/oder der zweiten Messleiterbahn (7) ausgebildet ist.

2. Baubahn nach Anspruch 1, **dadurch gekennzeichnet, dass** die Feuchtesensoren (5) einer Sensorgruppe (8a-8e) parallel geschaltet sind.

3. Baubahn nach einem der vorhergehenden Ansprüche, **dadurch gekennzeichnet, dass** wenigstens eine Leiterbahn (10) einen mit einer elektrischen Verbindungseinrichtung der Baubahn (1) verbindbaren Hauptleiterbahnabschnitt (14) und wenigstens einen von dem Hauptleiterbahnabschnitt (14) dieser Leiterbahn (11) über eine Trennstelle (13) getrennten Nebenleiterbahnabschnitt (15) aufweist, insbesondere wobei wenigstens eine Leiterbahn (11) eine Mehrzahl von Nebenleiterbahnabschnitten (15) aufweist, wobei die Nebenleiterbahnabschnitte (15) der jeweiligen Leiterbahnen (11) voneinander jeweils durch wenigstens eine, bevorzugt in der Leiterbahn (11) vorgesehene, Trennstelle (13) getrennt sind.

4. Baubahn nach einem der vorhergehenden Ansprüche, **dadurch gekennzeichnet, dass** wenigstens einer Leitungseinheit (12) ein Hauptleiterbahnabschnitt (14) einer Leiterbahn (11) und wenigstens ein Nebenleiterbahnabschnitt (15) wenigstens einer anderen Leiterbahn (11) zugeordnet ist, und/oder
dass wenigstens eine zweite Messleiterbahn (7) eines Feuchtesensors (5) einer jeweiligen Sensorgruppe (8a-8e) elektrisch mit dem Hauptleiterbahnabschnitt (14) der zugeordneten Leitungseinheit (12) verbunden ist und wenigstens einen Nebenleiterbahnabschnitt (15) der zugeordneten Leitungseinheit (12) kreuzt und elektrisch verbunden ist, wobei die zweite Messleiterbahn (7) von wenigstens einem Hauptleiterbahnabschnitt (14) einer anderen Leitungseinheit (12) durch wenigstens eine Trennstelle (13), bevorzugt in der zweiten Messleiterbahn (7), elektrisch getrennt ist.

5. Baubahn nach einem der vorhergehenden Ansprüche, **dadurch gekennzeichnet, dass** ein Nebenleiterbahnabschnitt (15) einer Leitungseinheit (12) alle zweiten Messleiterbahnen (7) der der Leitungseinheit (12) zugeordneten Sensorgruppe (8a-8e) kreuzt und elektrisch mit diesen verbunden ist oder
dass ein Nebenleiterbahnabschnitt (15) einer Leitungseinheit (12) wenigstens, insbesondere nur, eine zweite Messleiterbahn (7) der der Leitungseinheit (12) zugeordneten Sensorgruppe (8a-8e) kreuzt und mit dieser elektrisch verbunden ist.

6. Baubahn nach einem der vorhergehenden Ansprüche, **dadurch gekennzeichnet, dass** die Hauptleiterbahnabschnitte (14) und/oder die Zuleitung (9) zu einer externen Anschlusseinrichtung (16) elektrisch über jeweils wenigstens ein Verbindungsmittel (17) der Verbindungseinrichtung verbindbar sind, insbesondere wobei das Verbindungsmittel (17) komplementär zu einem weiteren Verbindungsmittel (17) der Anschlusseinrichtung (16) ausgebildet und mit dem weiteren Verbindungsmittel (17) formschlüssig und/oder reibschlüssig und/oder verrastbar verbindbar ist.

7. Baubahn nach einem der vorhergehenden Ansprüche, **dadurch gekennzeichnet, dass** die Zuleitung (9), die Leitungseinrichtung (10) und/oder die Leiterbahnen (11) der Leitungseinrichtung (10) auf die Außenseite (3) der Trägerschicht (2) aufgebracht, insbesondere aufgedruckt, ist/sind,
insbesondere wobei die Trennstellen (13) nach Aufbringen, insbesondere Aufdrucken, der Elektronikeinheit (4) hergestellt worden sind.

8. Baubahn nach einem der vorhergehenden Ansprüche, **dadurch gekennzeichnet, dass** wenigstens eine Sensorgruppe (8a-8e), insbesondere alle Sensorgruppen (8a-8e), eine Mehrzahl von Feuchtesensoren (5), bevorzugt zwischen 2 bis 20, weiter bevorzugt 3 bis 10, aufweist und/oder
dass alle Feuchtesensoren (5) aller Sensorgruppen (8a-8e) mit der gleichen Zuleitung (9) elektrisch verbunden sind.

9. Baubahn nach einem der vorhergehenden Ansprüche, **dadurch gekennzeichnet, dass** ein die Trägerschicht (2) und eine wasserdurchlässige, vorzugsweise wasseraufnehmende, Textilschicht (18) aufweisender mehrlagiger Schichtaufbau (24) vorgesehen ist,
insbesondere wobei die Textilschicht (18) im, insbesondere unmittelbaren, Kontakt zu der Elektronikeinheit (4) und/oder den Feuchtesensoren (5) ist und an der Textilschicht (18) anliegt und/oder insbesondere wobei die Elektronikeinheit (4) zwischen der Trägerschicht (2) und der Textilschicht (18) vorgesehen ist, wobei, vorzugweise, zwischen der Textilschicht (18) und der Elektronikeinheit (4) eine Klebeschicht zur stoffschlüssigen Verbindung der Textilschicht (18) mit der Elektronikeinheit (4) vorgesehen ist.

10. Baubahn nach einem der vorhergehenden Ansprüche, **dadurch gekennzeichnet, dass** die Leiterbahn (11) und/oder die Zuleitung (9) und/oder die Messleiterbahnen (6, 7) eine Materialdicke (19) von 1 bis 50 µm, bevorzugt von 1 bis 25 µm, aufweisen und/oder
dass die Leiterbahn (11) und/oder die Zuleitung (9) und/oder die Messleiterbahnen (6, 7) eine Breite (20) von 0,1 bis 8 mm, bevorzugt von 0,3 bis 2 mm, aufweisen.

11. Baubahn nach einem der vorhergehenden Ansprüche, **dadurch gekennzeichnet, dass** die zwei Messleiterbahnen (6, 7) des Feuchtesensors (5) an ihren einander zugewandten Enden zur Bildung eines Sensorbereichs zumindest bereichsweise miteinander kämmen und/oder dass die wenigstens zwei Messleiterbahnen (6, 7) des Feuchtesensors (5) jeweils eine Mehrzahl von abstehenden Fingern (21) aufweisen, wobei, vorzugsweise, die Finger (21) der Messleiterbahnen (6, 7) ineinander greifen und/oder miteinander kämmen,
insbesondere wobei der, insbesondere minimale, Abstand (22) unmittelbar benachbarter Finger (21) der Messleiterbahnen (6, 7) und/oder die, insbesondere maximale, Breite (20) wenigstens einer zwischen den wenigstens zwei Messleiterbahnen (6, 7) gebildete Wasserleitung weniger als 1 cm, bevorzugt weniger als 0,5 cm, weiter bevorzugt weniger als 0,3 cm, vorzugsweise zwischen 1 mm bis 10 mm, beträgt.

12. Baubahn nach einem der vorhergehenden Ansprüche, **dadurch gekennzeichnet, dass** sich die Sensorgruppe (8a-8e) über jeweils eine Länge der Baubahn (1) von wenigstens 0,2 m, bevorzugt zwischen 0,3 m bis 5 m, weiter bevorzugt zwischen 0,5 m bis 3 m, erstreckt und/oder
dass der Abstand unmittelbar benachbarter Feuchtesensoren (5) einer Sensorgruppe (8a-8e) zwischen 10 cm bis 5 m, bevorzugt zwischen 20 cm bis 3 m, weiter bevorzugt zwischen 40 cm bis 1,5 m, beträgt.

13. Baubahn nach einem der vorhergehenden Ansprüche, **dadurch gekennzeichnet, dass** die Trägerschicht (2) wasserdicht ausgebildet ist und/oder dass die Trägerschicht (2) als, vorzugsweise wasserdichte, Folienschicht ausgebildet ist, insbesondere wobei die Trägerschicht (2) als Material einen Kunststoff, vorzugsweise einen thermoplastischen Kunststoff, weiter bevorzugt Polypropylen, Polyethylen und/oder Polyethylenterephthalat, aufweist und/oder daraus besteht, und/oder dass die Trägerschicht (2) diffusionsoffen, insbesondere wasserdampfdurchlässig, und/oder wasserdicht und/oder atmungsaktiv ausgebildet ist und/oder dass die Trägerschicht (2) diffusionsdicht, diffusionshemmend, wasserdampfundurchlässig und/oder wasserdicht ausgebildet ist und/oder
dass die, bevorzugt als Vliesschicht ausgebildete, Textilschicht (18) hydrophile Fasern aufweist, insbesondere aus hydrophilen Fasern, bevorzugt Polyethylenterephthalat aufweisende Fasern, aufgebaut ist, und/oder dass die Fasern der Textilschicht (18) eine hydrophile Beschichtung aufweisen.

14. Verfahren zur Herstellung einer Baubahn (1), insbesondere zur Verwendung als Dachbahn, nach einem der vorhergehenden Ansprüche, wobei die Baubahn (1) eine Trägerschicht (2) aufweist, wobei auf der Außenseite (3) der Trägerschicht (2) eine Elektronikeinheit (4) aufweisend eine Mehrzahl von eine erste und eine zweite Messleiterbahn (6, 7) zur resistiven und/oder kapazitiven Feuchtemessung aufweisende Feuchtesensoren (5) angeordnet, bevorzugt aufgedruckt, wird,
wobei eine Mehrzahl von jeweils durch wenigstens einen Feuchtesensor (5) gebildete Sensorgruppen (8a-8e) vorgesehen ist,
wobei die erste Messleiterbahn (6) des Feuchtesensors (5) mit wenigstens einer Zuleitung (9) elektrisch verbunden wird,
wobei die zweite Messleiterbahn (7) des Feuchtesensors (5) mit einer eine Mehrzahl von Leiterbahnen (11) aufweisenden Leitungseinrichtung (10) elektrisch verbunden wird,
wobei jeder Sensorgruppe (8a-8e) eine mit der zweiten Messleiterbahn (7) des jeweiligen Feuchtesensors (5) der jeweiligen Sensorgruppe (8a-8e) elektrisch verbundene Leitungseinheit (12) der Leitungseinrichtung (10) zugeordnet wird, wobei die einzelnen Leitungseinheiten (12) elektrisch voneinander über wenigstens eine Trennstelle (13) und/oder Trennstellen (13), nämlich in den jeweiligen Leiterbahnen (11) und/oder in den jeweiligen zweiten Messleiterbahnen (7), getrennt werden, wobei die Trennstelle (13) als Unterbrechung der Leiterbahn (11) und/oder der zweiten Messleiterbahn (7) ausgebildet ist.

15. Verfahren nach Anspruch 14, **dadurch gekennzeichnet, dass** die Trennstellen (13) nach Aufbringen, insbesondere Aufdrucken, der Elektronikeinheit (4) durch Entfernung von elektrisch leitfähigem Material hergestellt werden, insbesondere durch Laserschneiden, und/oder
dass die Trennstellen (13) beim Aufdrucken, bevorzugt im Digitaldruck, der Elektronikeinheit (4) durch eine Aussparung insbesondere im Druckbild bereitgestellt werden.

## Claims

1. Building membrane (1), in particular for use as a roofing membrane, with a carrier layer (2), wherein an electronic unit (4) comprising a plurality of humidity sensors (5) having a first and a second measuring conductor (6, 7) for resistive and/or capacitive humidity measurement is arranged, preferably printed, on the outer side (3) of the carrier layer (2),
wherein a plurality of sensor groups (8a-8e), each formed by at least one humidity sensor (5), are provided,
wherein the first measuring conductor (6) of the humidity sensor (5) is electrically connected to at least one supply line (9),
wherein the second measuring conductor (7) of the humidity sensor (5) is electrically connected to a conductor device (10) having a plurality of conductor tracks (11),
wherein each sensor group (8a-8e) is assigned a conductor unit (12) of the conductor device (10) which is electrically connected to the second measuring conductor (7) of the respective humidity sensor (5) of the respective sensor group (8a-8e), wherein the individual conductor units (12) are electrically separated from one another by at least one separation point (13) and/or separation points (13), namely in the respective conductor tracks (11) and/or in the respective second measuring conductor tracks (7), and wherein the separation point (13) is designed as an interruption of the conductor track (11) and/or the second measuring conductor (7).

2. Building membrane according to claim 1, **characterised in that** the humidity sensors (5) of a sensor group (8a-8e) are connected in parallel.

3. Building membrane according to one of the preceding claims, **characterised in that** at least one conductor device (10) has a main conductor track section (14) that can be connected to an electrical connection device of the building membrane (1) and at least one secondary conductor track section (15) separated from the main conductor track section (14) of this conductor track (11) via a separation point (13), in particular wherein at least one conductor track (11) has a plurality of secondary conductor track sections (15), wherein the secondary conductor track sections (15) of the respective conductor tracks (11) are separated from each other by at least one separation point (13), preferably provided in the conductor track (11).

4. Building membrane according to one of the preceding claims, **characterised in that** at least one conductor unit (12) is assigned a main conductor track section (14) of a conductor track (11) and at least one secondary conductor track section (15) of at least one other conductor track (11), and/or
**in that** at least one second measuring conductor (7) of a humidity sensor (5) of a respective sensor group (8a-8e) is electrically connected to the main conductor track section (14) of the associated conductor unit (12) and is electrically connected to and crosses at least one secondary conductor track section (15) of the associated conductor unit (12), wherein the second measuring conductor (7) being electrically separated from at least one main conductor track section (14) of another conductor unit (12) by at least one separation point (13), preferably in the second measuring conductor (7).

5. Building membrane according to one of the preceding claims, **characterised in that** a secondary conductor track section (15) of a conductor unit (12) crosses all second measuring conductor tracks (7) of the sensor group (8a-8e) assigned to the conductor unit (12) and is electrically connected to them, or
**in that** a secondary conductor track section (15) of a conductor unit (12) crosses at least, in particular only, one second measuring conductor (7) of the sensor group (8a-8e) assigned to the conductor unit (12) and is electrically connected to it.

6. Building membrane according to one of the preceding claims, **characterised in that** the main conductor track sections (14) and/or the supply line (9) to an external connection device (16) can be electrically connected via at least one connecting means (17) of the connection device, in particular wherein the connecting means (17) is designed to be complementary to a further connecting means (17) of the external connection device (16) and can be connected to the further connecting means (17) in a form-fitting and/or friction-fitting and/or lockable manner.

7. Building membrane according to one of the preceding claims, **characterised in that** the supply line (9), the conductor device (10) and/or the conductor tracks (11) of the conductor device (10) are applied, in particular printed, onto the outer side (3) of the carrier layer (2),
in particular wherein the separation points (13) have been produced after application, in particular printing, of the electronic unit (4).

8. Building membrane according to one of the preceding claims, **characterised in that** at least one sensor group (8a-8e), in particular all sensor groups (8a-8e), has a plurality of humidity sensors (5), preferably between 2 and 20, more preferably between 3 and 10, and/or
**in that** all humidity sensors (5) of all sensor groups (8a-8e) are electrically connected to the same supply line (9).

9. Building membrane according to one of the preceding claims, **characterised in that** a multi-layer structure (24) comprising the carrier layer (2) and a water-permeable, preferably water-absorbent, textile layer (18) is provided,
in particular wherein the textile layer (18) is in contact, in particular direct contact, with the electronic unit (4) and/or the humidity sensors (5) and rests against the textile layer (18) and/or in particular wherein the electronic unit (4) is provided between the carrier layer (2) and the textile layer (18), wherein, preferably, an adhesive layer is provided between the textile layer (18) and the electronic unit (4) for the material bonded connection of the textile layer (18) to the electronic unit (4).

10. Building membrane according to one of the preceding claims, **characterised in that** the conductor track (11) and/or the supply line (9) and/or the measuring conductor tracks (6, 7) have a material thickness (19) of 1 to 50 µm, preferably 1 to 25 µm, and/or
the conductor track (11) and/or the supply line (9) and/or the measuring conductor tracks (6, 7) have a width (20) of 0.1 to 8 mm, preferably 0.3 to 2 mm.

11. Building membrane according to one of the preceding claims, **characterised in that** the two measuring conductor tracks (6, 7) of the humidity sensor (5) interlock at least in some areas at their ends facing each other to form a sensor area and/or that the at least two measuring conductor tracks (6, 7) of the humidity sensor (5) each have a plurality of protruding fingers (21), wherein, preferably, the fingers (21) of the measuring conductor tracks (6, 7) interlock and/or interdigitate with one another,
in particular wherein the, in particular minimal, distance (22) between immediately adjacent fingers (21) of the measuring conductor tracks (6, 7) and/or the, in particular maximal, width (20) of at least one water channel formed between the at least two measuring conductor tracks (6, 7) is less than 1 cm, preferably less than 0.5 cm, more preferably less than 0.3 cm, preferably between 1 mm and 10 mm.

12. Building membrane according to one of the preceding claims, **characterised in that** the sensor group (8a-8e) extends over a length of the building membrane (1) of at least 0.2 m, preferably between 0.3 m and 5 m, more preferably between 0.5 m and 3 m, and/or
**in that** the distance between immediately adjacent humidity sensors (5) of a sensor group (8a-8e) is between 10 cm and 5 m, preferably between 20 cm and 3 m, and more preferably between 40 cm and 1.5 m.

13. Building membrane according to one of the preceding claims, **characterised in that** the carrier layer (2) is designed to be waterproof and/or that the carrier layer (2) is designed as a preferably waterproof film layer, in particular wherein the carrier layer (2) comprises as material a plastic, preferably a thermoplastic, more preferably polypropylene, polyethylene and/or polyethylene terephthalate, and/or consists of these, and/or that the carrier layer (2) is diffusion-open, in particular water vapour-permeable, and/or waterproof and/or breathable, and/or that the carrier layer (2) is diffusion-tight, diffusion-inhibiting, water vapour-impermeable and/or waterproof, and/or
**in that** the textile layer (18), preferably designed as a non-woven layer, comprises hydrophilic fibres, in particular fibres comprising hydrophilic fibres, preferably polyethylene terephthalate fibres, and/or the fibres of the textile layer (18) comprise a hydrophilic coating.

14. Method for manufacturing a building membrane (1), in particular for use as a roofing membrane, according to one of the preceding claims, wherein the building membrane (1) has a carrier layer (2), wherein an electronic unit (4) comprising a plurality of first and second measuring conductor tracks (6, 7) for resistive and/or capacitive humidity measurement, is arranged, preferably printed, on,
wherein a plurality of sensor groups (8a-8e) formed by at least one humidity sensor (5) each are provided,
wherein the first measuring conductor (6) of the humidity sensor (5) is electrically connected to at least one supply line (9),
wherein the second measuring conductor (7) of the humidity sensor (5) is electrically connected to a conductor device (10) having a plurality of conductor tracks (11),
wherein each sensor group (8a-8e) is assigned a conductor unit (12) of the conductor device (10) which is electrically connected to the second measuring conductor (7) of the respective humidity sensor (5) of the respective sensor group (8a-8e), wherein the individual conductor units (12) are electrically separated from one another by at least one separation point (13) and/or separation points (13), namely in the respective conductor tracks (11) and/or in the respective second measuring conductor tracks (7), wherein the separation point (13) is designed as an interruption of the conductor track (11) and/or the second measuring conductor (7).

15. Method according to claim 14, **characterised in that** the separation points (13) are produced after application, in particular printing, of the electronic unit (4) by removal of electrically conductive material, in particular by laser cutting, and/or in that the separation points (13) are provided during printing, preferably digital printing, of the electronic unit (4) by means of a recess, in particular in the printed image.

## Revendications

1. Membrane de construction (1), en particulier pour une utilisation comme membrane de toiture, comprenant une couche de support (2), une unité électronique (4) comportant une pluralité de capteurs d'humidité (5) présentant une première et une deuxième piste conductrice de mesure (6, 7) pour la mesure résistive et/ou capacitive de l'humidité étant disposée, de préférence imprimée, sur la face extérieure (3) de la couche de support (2),
une pluralité de groupes de capteurs (8a-8e) formés chacun par au moins un capteur d'humidité (5) étant prévue,
la première piste conductrice de mesure (6) du capteur d'humidité (5) étant reliée électriquement à au moins un câble d'alimentation (9),
la deuxième piste conductrice de mesure (7) du capteur d'humidité (5) étant reliée électriquement à un dispositif de conduction (10) comportant une pluralité de pistes conductrices (11),
chaque groupe de capteurs (8a-8e) étant associé à une unité de conduction (12) du dispositif de conduction (10) reliée électriquement à la deuxième piste conductrice de mesure (7) du capteur d'humidité (5) respectif du groupe de capteurs respectif (8a-8e), les différentes unités de conduction (12) étant séparées électriquement les unes des autres par au moins un point de séparation (13) et/ou des points de séparation (13), à savoir dans les pistes conductrices respectives (11) et/ou dans les deuxièmes pistes de mesure respectives (7), et le point de séparation (13) étant conçu comme une interruption de la piste conductrice (11) et/ou de la deuxième piste conductrice de mesure (7).

2. Membrane de construction selon la revendication 1, **caractérisée en ce que** les capteurs d'humidité (5) d'un groupe de capteurs (8a-8e) sont connectés en parallèle.

3. Membrane de construction selon l'une des revendications précédentes, **caractérisée en ce qu'**au moins une dispositif de conduction (10) comporte une section de piste conductrice principale (14) pouvant être reliée à un dispositif de connexion électrique de la bande de construction (1) et au moins une section de piste conductrice secondaire (15) séparée de la section de piste conductrice principale (14) de cette piste conductrice (11) par un point de séparation (13) (15) séparée de la section de piste conductrice principale (14) de cette piste conductrice (11) par un point de séparation (13), en particulier au moins une piste conductrice (11) comportant une pluralité de sections de piste conductrice secondaire (15), les sections de piste conductrice secondaire (15) des pistes conductrices respectives (11) étant séparées les unes des autres par au moins un point de séparation (13) prévu de préférence dans la piste conductrice (11).

4. Membrane de construction selon l'une des revendications précédentes, **caractérisée en ce qu'**au moins une unité de conduction (12) est associée à une section de piste conductrice principale (14) d'une piste conductrice (11) et à au moins une section de piste conductrice secondaire (15) d'au moins une autre piste conductrice (11), et/ou
**en ce que** au moins une deuxième piste conductrice de mesure (7) d'un capteur d'humidité (5) d'un groupe de capteurs respectif (8a-8e) est reliée électriquement à la section de piste conductrice principale (14) de l'unité de conduction associée (12) et croise au moins une section de piste conductrice secondaire (15) de l'unité de conduction associée (12) et est reliée électriquement, la deuxième piste conductrice de mesure (7) étant séparée électriquement d'au moins une section de piste conductrice principale (14) d'une autre unité de conduction (12) par au moins un point de séparation (13), de préférence dans la deuxième piste conductrice de mesure (7).

5. Membrane de construction selon l'une des revendications précédentes, **caractérisée en ce qu'**une section de piste conductrice secondaire (15) d'une unité de conduction (12) croise toutes les deuxièmes pistes conductrices de mesure (7) du groupe de capteurs (8a-8e) associé à l'unité de conduction (12) et est reliée électriquement à celles-ci ou
**en ce qu'**une section de piste secondaire (15) d'une unité de conduction (12) croise au moins, en particulier uniquement, une deuxième piste de mesure (7) du groupe de capteurs (8a-8e) associé à l'unité de conduction (12) et est reliée électriquement à celle-ci.

6. Membrane de construction selon l'une des revendications précédentes, **caractérisée en ce que** les sections de piste conductrice principale (14) et/ou la câble d'alimentation (9) vers un dispositif de raccordement externe (16) peuvent être reliées électriquement via au moins un moyen de connexion (17) du dispositif de connexion, en particulier le moyen de connexion (17) étant conçu de manière complémentaire à un autre moyen de connexion (17) du dispositif de raccordement (16) et pouvant être relié à l'autre moyen de connexion (17) par complémentarité de forme et/ou par friction et/ou par encliquetage.

7. Membrane de construction selon l'une des revendications précédentes, **caractérisée en ce que** la câble d'alimentation (9), le dispositif de conduction (10) et/ou les pistes conductrices (11) du dispositif de conduction (10) sont appliqués, en particulier imprimés, sur la face extérieure (3) de la couche de support (2),
en particulier les points de séparation (13) ayant été réalisés après l'application, en particulier l'impression, de l'unité électronique (4).

8. Membrane de construction selon l'une des revendications précédentes, **caractérisée en ce qu'**au moins un groupe de capteurs (8a-8e), en particulier tous les groupes de capteurs (8a-8e), comporte une pluralité de capteurs d'humidité (5), de préférence entre 2 et 20, de préférence encore entre 3 et 10, et/ou en ce que tous les capteurs d'humidité (5) de tous les groupes de capteurs (8a-8e) sont reliés électriquement au même câble d'alimentation (9).

9. Membrane de construction selon l'une des revendications précédentes, **caractérisée en ce qu'**il est prévu une structure multicouche (24) comportant la couche de support (2) et une couche textile (18) perméable à l'eau, de préférence absorbant l'eau,
en particulier la couche textile (18) étant en contact, en particulier direct, avec l'unité électronique (4) et/ou les capteurs d'humidité (5) et reposant contre la couche textile (18) et/ou en particulier l'unité électronique (4) est prévue entre la couche de support (2) et la couche textile (18), une couche adhésive étant de préférence prévue entre la couche textile (18) et l'unité électronique (4) pour relier la couche textile (18) à l'unité électronique (4) par adhérence.

10. Membrane de construction selon l'une des revendications précédentes, **caractérisée en ce que** la piste conductrice (11) et/ou le câble d'alimentation (9) et/ou les pistes conductrices de mesure (6, 7) ont une épaisseur de matériau (19) de 1 à 50 µm, de préférence de 1 à 25 µm, et/ou
**en ce que** la piste conductrice (11) et/ou le câble d'alimentation (9) et/ou les pistes conductrices de mesure (6, 7) présentent une largeur (20) comprise entre 0,1 et 8 mm, de préférence entre 0,3 et 2 mm.

11. Membrane de construction selon l'une des revendications précédentes, **caractérisée en ce que** les deux pistes conductrices de mesure (6, 7) du capteur d'humidité (5) s'entrecroisent au moins par endroits à leurs extrémités se faisant face pour former une zone de capteur et/ou **en ce que** les au moins deux pistes conductrices de mesure (6, 7) du capteur d'humidité (5) comportent chacune une pluralité de doigts saillants (21), les doigts (21) des pistes conductrices de mesure (6, 7) s'emboîtant de préférence les uns dans les autres et/ou s'entrecroisant,
en particulier la distance (22), en particulier minimale, entre des doigts (21) immédiatement adjacents des pistes conductrices de mesure (6, 7) et/ou la largeur (20), en particulier maximale, d'au moins un conduit d'eau formé entre les au moins deux pistes conductrices de mesure (6, 7) étant inférieure à 1 cm, de préférence inférieure à 0,5 cm, de préférence moins de 0,3 cm, de préférence entre 1 mm et 10 mm.

12. Membrane de construction selon l'une des revendications précédentes, **caractérisée en ce que** le groupe de capteurs (8a-8e) s'étend sur une longueur de la membrane de construction (1) d'au moins 0,2 m, de préférence entre 0,3 m et 5 m, de préférence encore entre 0,5 m et 3 m, et/ou
**en ce que** la distance entre des capteurs d'humidité (5) immédiatement adjacents d'un groupe de capteurs (8a-8e) est comprise entre 10 cm et 5 m, de préférence entre 20 cm et 3 m, de préférence encore entre 40 cm et 1,5 m.

13. Membrane de construction selon l'une des revendications précédentes, **caractérisée en ce que** la couche de support (2) est étanche à l'eau et/ou **en ce que** la couche de support (2) est conçue comme une couche de film, de préférence étanche à l'eau, la couche de support (2) étant en particulier constituée d'une matière plastique, de préférence d'une matière thermoplastique, de préférence encore de polypropylène, du polyéthylène et/ou du polyéthylène téréphtalate, et/ou est constituée de ceux-ci, et/ou **en ce que** la couche de support (2) est ouverte à la diffusion, en particulier perméable à la vapeur d'eau, et/ou imperméable à l'eau et/ou respirante et/ou que la couche de support (2) est imperméable à la diffusion, inhibe la diffusion, est imperméable à la vapeur d'eau et/ou imperméable à l'eau et/ou en ce que la couche textile (18), de préférence conçue comme une couche non tissée, comporte des fibres hydrophiles, en particulier est constituée de fibres hydrophiles, de préférence de fibres comportant du polyéthylène téréphtalate, et/ou **en ce que** les fibres de la couche textile (18) comportent un revêtement hydrophile.

14. Procédé de fabrication d'une membrane de construction (1), en particulier destinée à être utilisée comme membrane de toiture, selon l'une des revendications précédentes, la membrane de construction (1) comportant une couche de support (2), une unité électronique (4) comportant une pluralité de capteurs d'humidité (5) comportant une première et une deuxième pistes conductrices de mesure (6, 7) pour la mesure résistive et/ou capacitive de l'humidité, est disposée, de préférence imprimée, sur la face extérieure (3) de la couche de support (2),
une pluralité de groupes de capteurs (8a-8e) formés chacun par au moins un capteur d'humidité (5) étant prévue,
la première piste conductrice de mesure (6) du capteur d'humidité (5) étant reliée électriquement à au moins un câble d'alimentation (9),
la deuxième piste conductrice de mesure (7) du capteur d'humidité (5) étant reliée électriquement à un dispositif de conduction (10) comportant une pluralité de pistes conductrices (11),
chaque groupe de capteurs (8a-8e) étant associé à une unité de conduction (12) du dispositif de conduction (10) connectée électriquement à la deuxième piste conductrice de mesure (7) du capteur d'humidité (5) respectif du groupe de capteurs respectif (8a-8e), les différentes unités de contrôle (12) étant séparées électriquement les unes des autres par au moins un point de séparation (13) et/ou des points de séparation (13), à savoir dans les pistes conductrices respectives (11) et/ou dans les deuxièmes pistes de mesure respectives (7), le point de séparation (13) étant conçu comme une interruption de la piste conductrice (11) et/ou de la deuxième piste conductrice de mesure (7).

15. Procédé selon la revendication 14, **caractérisé en ce que** les points de séparation (13) sont réalisés après l'application, en particulier l'impression, de l'unité électronique (4) par élimination de matériau électriquement conducteur, en particulier par découpe au laser, et/ou
**en ce que** les points de séparation (13) sont réalisés lors de l'impression, de préférence en impression numérique, de l'unité électronique (4) par un évidement, en particulier dans l'image imprimée.
